(19) Europäisches Patentamt
European Patent Office
Office européen des brevets

(11) **EP 2 586 646 B1**

(12) **EUROPÄISCHE PATENTSCHRIFT**

(45) Veröffentlichungstag und Bekanntmachung des Hinweises auf die Patenterteilung:
**04.12.2019   Patentblatt 2019/49**

(51) Int Cl.:
***B60L 9/28*** *(2006.01)*          ***B60L 9/30*** *(2006.01)*

(21) Anmeldenummer: **12189950.4**

(22) Anmeldetag: **25.10.2012**

(54) **Elektrische Energieversorgungsanordnung für Antriebseinrichtungen, zum Betreiben eines Schienenfahrzeugs an elektrischen Versorgungsnetzen**

Electrical power supply assembly for drive units, for operating a rail vehicle on electrical supply networks

Dispositif électrique d'alimentation en énergie pour dispositifs d'entraînement destiné au fonctionnement d'un véhicule sur rail sur des réseaux d'alimentation électriques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011   DE 102011085481**

(43) Veröffentlichungstag der Anmeldung:
**01.05.2013   Patentblatt 2013/18**

(73) Patentinhaber: **Bombardier Transportation GmbH 10785 Berlin (DE)**

(72) Erfinder:
• **Lindenmüller, Lars**
  **01127 Dresden (DE)**
• **Reinold, Harry**
  **76831 Ilbesheim (DE)**
• **Fröhlich, Michael**
  **68723 Plankstadt (DE)**

(74) Vertreter: **Brunotte, Joachim Wilhelm Eberhard Patentanwälte Bressel und Partner mbB Potsdamer Platz 10 10785 Berlin (DE)**

(56) Entgegenhaltungen:
**EP-A1- 0 826 550          EP-A2- 0 992 390 DE-A1- 10 204 219          DE-A1- 19 614 627 US-A1- 2010 314 937**

EP 2 586 646 B1

## Beschreibung

Die Erfindung betrifft eine elektrische Energieversorgungsanordnung für Antriebseinrichtungen, zum Betreiben eines Schienenfahrzeugs an elektrischen Versorgungsnetzen, und ein entsprechendes Betriebs-Verfahren sowie ein Verfahren zum Herstellen einer derartigen elektrischen Energieversorgungsanordnung.

Für die Versorgung von Antriebseinrichtungen von Schienenfahrzeugen werden je nach Land oder Region elektrische Versorgungsnetze in unterschiedlicher Weise betrieben. Realisiert ist z. B. in Deutschland eine elektrische Versorgung mit Wechselspannung bei einer Frequenz von 16,7 Hz und einer Nennspannung von 15 kV. Ein anderes System wird bei Wechselspannung mit 50 Hz und einer Nennspannung von 25 kV betrieben. Auch existieren Gleichspannungssysteme, insbesondere bei 3 kV und 1,5 kV Nennspannung.

Für den Betrieb an Wechselspannungs-Versorgungsnetzen ist es üblich, die vergleichsweise hohe Wechselspannung des Versorgungsnetzes zunächst über einen Eingangstransformator des Schienenfahrzeugs auf einen niedrigeren Wechselspannungswert herunter zu transformieren, die herunter transformierte Wechselspannung gleichzurichten und in einen so genannten GleichspannungsZwischenkreis einzuspeisen, an dem ein Traktionswechselrichter für den Betrieb eines Traktionsmotors oder mehrerer Traktionsmotoren angeschlossen ist. Nachteilig an dieser Lösung ist aber die Größe und das Gewicht des Eingangstransformators, insbesondere bei Frequenzen von 16,7 Hz, aber auch noch bei Frequenzen von 50 Hz.

Wenn ein Schienentriebfahrzeug an einem Gleichspannungs-Versorgungsnetz betrieben werden soll, wird der Gleichspannungszwischenkreis z. B. über eine Induktivität direkt an das Versorgungsnetz angeschlossen. Die Induktivität dient als passiver Filter der Vermeidung bzw. Dämpfung von Störungen, die vom Versorgungsnetz auf die Schiene übertragen werden könnten. Alternativ zu dem passiven Filter sind aktive Filter für den Betrieb an Gleichspannungs-Versorgungsnetzen vorgeschlagen worden, die Wechselspannungen und damit Wechselströme erzeugen, welche die beim Betrieb des Traktionswechselrichters erzeugten Störströme kompensieren.

Um den Verkehr in verschiedenen Schienenverkehrsnetzen zu erleichtern, sind teilweise dieselben Schienentriebfahrzeuge (z. B. Lokomotiven oder Triebköpfe) für den Betrieb an den unterschiedlichen elektrischen Versorgungsnetzen ausgestattet. Dabei soll insbesondere auch der Betrieb an Gleichspannungs-Versorgungsnetzen mit unterschiedlichen Nennspannungen (z.B. den oben erwähnten 3 kV und 1,5 kV) möglich sein. Typischerweise werden der Traktionswechselrichter, der eine oder mehrere Fahrmotor(en) des Schienenfahrzeugs mit Wechselstrom versorgt, sowie der oder die Fahrmotoren für eine vorgegebene Gleichspannung am Eingang des Traktionswechselrichters konzipiert. Der Betrieb mit elektrischen Gleichspannungs-Versorgungsnetzen mit unterschiedlichen Nenn- bzw. Betriebsspannungen lässt sich realisieren, indem der Gleichspannungsanschluss des Traktionswechselrichters über einen DC/DC-Konverter mit dem netzseitigen Anschluss des Schienenfahrzeugs verbunden wird. Bei Bedarf konvertiert der DC/DC-Konverter die Netzspannung auf das vorgegebene Spannungsniveau am Gleichspannungsanschluss des Traktionswechselrichters, z.B. von 3 kV auf 1,5 kV. Im umgekehrten Fall, wenn die vorgegebene Gleichspannung größer ist als die Netzspannung, kann ein DC/DC-Konverter als Hochsetzsteller betrieben werden oder es kann alternativ ein Betrieb des Traktionswechselrichters bei reduzierter Eingangsspannung und damit reduzierter Maximalleistung stattfinden. Bei Verwendung eines DC/DC-Konverters ist aber das zusätzliche Gewicht nachteilig.

DE 102 04 219 A1 beschreibt ein Stromrichtersystem mit mindestens drei Teilsystemen zur Speisung eines Drehstrom-Verbrauchers wie beispielsweise eines Bahnantriebes aus einem Hochspannungsnetz. Netzseitig sind die Teilsysteme in Serie oder parallel geschaltet. Motorseitig sind die Teilsysteme sterngeschaltet und bilden so ein Drehspannungssystem. Jedes Teilsystem hat jeweils ein Subteilsystem, das mindestens einen netzseitigen Gleichspannungswechselrichter, mindestens einen Zwischenkreiskondensator, mindestens einen Mittelfrequenz-Gleichspannungswechselrichter, mindestens einen Mittelfrequenz-Transformator, mindestens einen motorseitigen Mittelfrequenz-Gleichspannungswechselrichter und mindestens einen Glättungskondensator aufweist. Mit dem Stromrichtersystem wird eine von vier Energiewandlungsstufen (AC-DC, DC-AC, AC-DC, DC-AC) vermieden, wie es bei vorbekannten Stromrichtersystemen der Fall war. Das Stromrichtersystem benötigt nur noch die drei Energiewandlungsstufen (AC-DC, DC-AC, AC-DC).

EP 0 826 550 A1 beschreibt eine Vorrichtung und ein Verfahren zum Bereitstellen einer Gleichspannung für ein Traktionssystem mittels Stromrichter aus verschiedenen Wechselspannungen und Gleichspannungen auf einer Versorgungsleitung. Ein erstes Leistungsversorgungselement und ein zweites Leistungsversorgungselement sind mit der Versorgungsleitung verbunden. Dabei ist das erste Versorgungselement mit der Primärwicklung eines Transformators verbunden, und zwar über ein erstes Verbindungselement. Das zweite Versorgungselement ist entweder mit den Leistungsversorgungsanschlüssen des Traktionssystems oder mit einem Mittelpunkt einer Reihenschaltung von Stromrichtern verbunden, und zwar über ein zweites Verbindungselement.

EP 0 992 390 A2 beschreibt eine modular aufgebaute Schaltungsanordnung für einen Antrieb eines Schienenfahrzeugs, die mindestens zwei in Serie geschaltete leistungselektronische, jeweils eine galvanische Trennstelle aufweisende Module aufweist. Ein erstes dieser Module ist an ein Hochspannungspotenzial, ein zweites an Masse oder Erdpotential geführt. Das erste Modul enthält eine auf Hochspannungspotential befindliche leistungselektronische Baugruppe, welche mit einer auf niedrigerem Potential befindlichen leistungselektronischen Baugruppe des zweiten oder eines dritten Moduls verbunden ist. In einer Ausführungsform weist jedes Modul eine mit den beiden Eingängen verbundene leistungselektronische Baugruppe auf, einen eine galvanische Trennstelle bildenden Transformator und eine dem Transformator nachgeschaltete leistungselektronische Baugruppe mit zwei Ausgängen auf. Die Ausgänge liegen parallel und sind über Stromrichtersysteme mit Antriebsmotoren verbunden.

Die beigefügten Ansprüche definieren den Schutzumfang.

Es ist eine Aufgabe der vorliegenden Erfindung, eine elektrische Energieversorgungsanordnung für Antriebseinrichtungen eines Schienenfahrzeugs anzugeben, die ein geringes Gewicht besitzen und sowohl an Wechselspannungsnetzen als auch an Gleichspannungsnetzen betrieben werden können. Dabei soll der Betrieb mit zumindest einer Nenn-Gleichspannung am Netzanschluss der Energieversorgungsanordnung möglich sein. Vorzugsweise soll der Betrieb an verschiedenen Nenn-Gleichspannungen, d.h. an verschiedenen Gleichspannungsversorgungsnetzen möglich sein.

Es ist eine weitere Aufgabe der vorliegenden Erfindung ein entsprechendes Verfahren zum Betreiben eines Schienenfahrzeugs mit einer solchen Energieversorgungsanordnung anzugeben. Ferner ist es eine Aufgabe der vorliegenden Erfindung ein entsprechendes Herstellungs-Verfahren einer solchen Energieversorgungsanordnung anzugeben.

Ein Grundgedanke der vorliegenden Erfindung besteht darin, für den Betrieb an Wechselspannungsnetzen eine besondere Art von Gleichrichteranordnungen zu. Diese Gleichrichteranordnungen weisen eine Mehrzahl von ersten Gleichrichtern auf, die ohne galvanische Trennung (d.h. insbesondere ohne Zwischenschaltung eines Transformators) an das Wechselspannungsnetz angeschlossen werden. Die von den ersten Gleichrichtern erzeugten Gleichspannungen werden zu jeweils einer Wechselspannung mit höherer Frequenz (insbesondere im Mittelfrequenzbereich von 8 bis 20 kHz) umgerichtet, die Wechselspannung wird jeweils der Primärseite eines oder mehrerer Transformatoren (insbesondere mit galvanischer Entkopplung) zugeführt und die an der Sekundärseite des Transformators oder der Transformatoren anliegende Sekundär-Wechselspannung wird jeweils durch einen oder mehrere zweite Gleichrichter wieder gleichgerichtet und liegt am Gleichspannungszwischenkreis an, aus dem üblicherweise zumindest ein Traktionswechselrichter für den oder die Fahrmotoren des Schienenfahrzeugs gespeist wird/werden.

Das Prinzip und Varianten einer solchen Gleichrichteranordnung für den Betrieb an Wechselspannungsnetzen sind z. B. in der DE 196 30 284 A1 beschrieben. Eine Variante besteht insbesondere darin, dass mehrere Module, die jeweils einen netzseitigen ersten Gleichrichter, zumindest einen Wechselrichter, zumindest einen Transformator und zumindest einen zweiten Gleichrichter aufweisen, vorhanden sind. Dabei sind netzseitige, erste Gleichrichter in Reihe geschaltet, während die über den Gleichspannungszwischenkreis an den zumindest einen Traktionswechselrichter angeschlossenen zweiten Gleichrichter parallel geschaltet sind. Dadurch können die netzseitigen ersten Gleichrichter an eine hohe Wechselspannung des Versorgungsnetzes angeschlossen werden und liefern dennoch die gewünschte niedrigere Gleichspannung für den Gleichspannungszwischenkreis.

Ein wesentlicher Vorteil einer solchen an sich bekannten Energieversorgungsanordnung ist das wesentlich geringere Gewicht. Es wird kein Transformator für niedrige Frequenzen benötigt, bei denen die Wechselspannungsnetze betrieben werden. Vielmehr werden die Transformatoren der Anordnung bei einer wesentlich höheren Frequenz betrieben, die vorzugsweise im Mittelfrequenzbereich in der Größenordnung von 10 kHz liegt (z. B. im Bereich von 1 kHz bis 100 kHz, insbesondere im Bereich von 5 kHz bis 40 kHz). Solche Transformatoren können bei erheblich kleineren Bauvolumina und damit erheblich geringeren Gewichten gebaut werden. Das zusätzliche Gewicht für die verschiedenen Gleichrichter und Wechselrichter ist im Verhältnis zu der erzielten Gewichtsersparnis gering.

Derartige Energieversorgungsanordnungen mit Mittelfrequenztopologie sind jedoch lediglich für den Betrieb an Wechselspannungsnetzen und wahlweise eine Art von Gleichspannungsnetzen bekannt. Für den Betrieb an Gleichspannungsnetzen mit verschiedenen Nennspannungen könnte wiederum ein DC/DC-Konverter zusätzlich vorgesehen werden, wodurch sich jedoch das Gewicht der Gesamtanordnung in unerwünschter Weise erhöht.

Es wird daher vorgeschlagen, zumindest Teile der Energieversorgungsanordnung, die für den Betrieb an Wechselspannungsnetzen ausgestaltet ist, auch als DC/DC-Konverter zu verwenden. Hierfür eignen sich insbesondere zumindest zwei Transformatoren mit den primär- und sekundärseitig an die Transformatoren angeschlossenen Konvertern. Wenn als die Primärseite des jeweiligen Transformators durchgängig die Seite bezeichnet wird, welche bei Betrieb am Wechselspannungsnetz an den netzseitigen, ersten Gleichrichter angeschlossen ist, wird für den Betrieb an einem Gleichspannungsnetz die Primärseite eines Transformators mit der Primärseite eines anderen Transformators verbunden und Energie aus dem Gleichspannungsnetz über die Sekundärseite des ersten Transformators, die Primärseite des ersten Transformators, die Primärseite des zweiten Transformators und die Sekundärseite des zweiten Transformators der Gleichspannungsseite zumindest eines Traktionswechselrichters zugeführt. Außerdem kann ein Teil der Energie direkt von dem Gleichspannungsnetz dem oder den Fahrmotoren zugeführt werden und dabei nicht über die Transformatoren und Gleichrichter übertragen werden. Bei dieser verkürzten Darstellung des Energieflusses sind die mit den Transformatoren verbundenen Konverter nicht erwähnt worden. Zumindest ist auf der Sekundärseite jedes der Transformatoren wenigstens ein Konverter vorhanden, der beim Betrieb am Wechselspannungsnetz als Gleichrichter betrieben wird und beim Betrieb am Gleichspannungsnetz je nach Platz in der Energieflusskette als Wechselrichter oder Gleichrichter betrieben wird.

Insbesondere können die Primärseiten der beiden Transformatoren nicht unmittelbar miteinander gekoppelt werden, sondern jeweils über zumindest einen weiteren Konverter, der beim Betrieb am Wechselspannungsnetz als Wechselrichter betrieben wird, miteinander verbunden. Z. B. können jeweils zumindest ein Konverter auf der Primärseite und Sekundärseite jedes der beiden Transformatoren gemeinsam mit dem Transformator und die Resonanzfrequenz mitbestimmende Kondensatoren einen Serienresonanzkonverter bilden. Solche Serienresonanzkonverter sind an sich auf dem Gebiet der Elektrotechnik bekannt und können auf einfache Weise dadurch betrieben werden, dass Ventile (insbesondere die Halbleiterschalter) der Konverter bei konstanter Schaltfrequenz ein- und ausgeschaltet werden. Wenn die Schaltfrequenz auf die Resonanzfrequenz des Serienresonanzkonverters abgestimmt ist (Abstimmung bedeutet nicht zwangsläufig, dass die Schaltfrequenz gleich der Resonanzfrequenz ist), findet über den Transformator eine besonders effektive Energieübertragung statt. Es können jedoch auch andere Arten von DC/DC-Konverter genutzt werden, die eine galvanische Trennung zwischen Primärseite und Sekundärseite bewirken.

Die Erfindung ist nicht darauf beschränkt, als DC/DC-Konverter lediglich zwei Transformatoren und die damit verbundenen Konverter einzusetzen. Vielmehr können z.B. jeweils paarweise zwei Transformatoren und die zugehörigen Konverter in der genannten Weise als DC/DC-Konverter genutzt werden, so dass z.B. vier, sechs oder acht Transformatoren in zwei, drei oder vier Paaren genutzt werden. All diese Transformatoren und Konverter werden beim Betrieb am Wechselspannungsnetz in der oben genannten Weise betrieben, bei der zunächst an der Wechselspannungsseite der Energieversorgungsanordnung eine Gleichrichtung des elektrischen Stroms stattfindet, d.h. die Netz-Wechselspannung in eine Gleichspannung umgewandelt wird.

Es ist jedoch nicht zwingend erforderlich, die Transformatoren und zugehörigen Konverter jeweils paarweise zu einem DC/DC-Konverter zu koppeln. Vielmehr kann je nach Ausgestaltung der Energieversorgungsanordnung, je nach Spannung am Versorgungsnetz und je nach gewünschter Gleichspannung an der Gleichspannungsseite des Traktionswechselrichters kann z.B. auch eine Kopplung eines Transformators, der mit seiner Sekundärseite am Gleichspannungsnetz betrieben wird, über seine Primärseite mit mehr als einem Transformator stattfinden, der mit seiner Sekundärseite zweipolig am Gleichspannungsanschluss des Traktionswechselrichters bzw. eines entsprechenden Gleichspannungszwischenkreises angeschlossen ist. Alternativ oder zusätzlich können auch die Primärseiten von mehr als einem Transformator der Energieversorgungsanordnung miteinander gekoppelt sein, wobei die Sekundärseiten dieser Transformatoren an das Gleichspannungsnetz angeschlossen sind.

Wie noch näher beschrieben wird, ist es außerdem möglich, die Gleichrichter, deren Wechselspannungsseiten beim Betrieb am Wechselspannungsnetz ohne galvanische Trennung am Wechselspannungsnetz betrieben werden, ebenfalls für den DC/DC-Konverter einzusetzen. Bei entsprechender Ausgestaltung der Gleichrichter, z.B. als gesteuerter oder geregelter Gleichrichter mit Halbleiterschaltern und einstellbaren Schaltfolgen der Schalter, kann die von dem gesamten DC/DC-Konverter erzeugte Ausgangs-Gleichspannung, welche auf den Gleichspannungszwischenkreis des oder der Traktionswechselrichter ausgegeben wird, variiert werden und damit auf Werte eingestellt werden, die unterschiedlichen Betriebssituationen entsprechen. Daher wird z.B. der DC/DC-Konverter jeweils beim Betrieb an unterschiedlichen Gleichspannungsnetzen mit verschiedenen Nennspannungen bzw. Betriebsspannungen verwendet. Abhängig von der jeweiligen Gleichspannung des Gleichspannungsnetzes kann durch Steuerung oder Regelung des Betriebs der genannten Gleichrichter (der so genannten ersten Gleichrichter in der weiter unten verwendeten Terminologie) immer die gewünschte Ausgangsspannung des DC/DC-Konverters erzielt werden. Möglich ist insbesondere auch, auf diese Weise Schwankungen der Gleichspannung des Versorgungsnetzes auszugleichen. Z.B. kann die Regelung der ersten Gleichrichter abhängig von einem Messwert der Netz-Gleichspannung ausgeführt werden. Selbstverständlich ist es aber zusätzlich möglich, beim Betrieb an einem anderen Gleichspannungsnetz den Gleichspannungszwischenkreis des Traktionswechselrichters ohne Zwischenschaltung eines DC/DC-Konverters mit dem Gleichspannungsnetz zu verbinden.

Es wird Folgendes vorgeschlagen: Elektrische Energieversorgungsanordnung für Antriebseinrichtungen, zum Betreiben eines Schienenfahrzeugs an elektrischen Versorgungsnetzen, wobei die Energieversorgungsanordnung aufweist:

- zumindest einen elektrischen Netzanschluss zum Anschließen der Anordnung an ein elektrisches Energieversorgungsnetz,
- einen motorseitigen elektrischen Anschluss zum Anschließen der Anordnung an einen Gleichspannungszwischenkreis, an den wiederum zumindest ein Traktionswechselrichter zum Betreiben zumindest eines Fahrmotors anschließbar ist,
- eine Gleichrichteranordnung zum Betrieb des Schienenfahrzeugs an einem Wechselspannungsnetz, wobei die Gleichrichteranordnung über einen ersten Filter mit dem elektrischen Netzanschluss oder mit einem der elektrischen Netzanschlüsse verbunden ist und eine Mehrzahl von Modulen aufweist, in denen jeweils ein erster Gleichrichter über einen Wechselrichter, der an die Primärseite eines Transformators angeschlossen ist, und über den Transformator mit einem zweiten Gleichrichter verbunden ist, wobei die Sekundärseite des Transformators mit dem zweiten Gleichrichter verbunden ist und der erste Gleichrichter an seiner Wechselspannungsseite über den ersten Filter mit dem elektrischen Netzanschluss oder mit dem einen der elektrischen Netzanschlüsse verbunden ist, wobei der zweite Gleichrichter an seiner Gleichspannungsseite mit dem motorseitigen elektrischen Anschluss verbunden ist und wobei die Wechselspannungsanschlüsse der ersten Gleichrichter in Serie geschaltet sind, wobei - bei Betrieb des Schienenfahrzeugs an einem Wechselspannungsnetz - die Gleichspannungsanschlüsse der zweiten Gleichrichter parallel geschaltet sind,

• eine elektrische Anschlussverbindung zum Betrieb des Schienenfahrzeugs an einem Gleichspannungsnetz, wobei die elektrische Anschlussverbindung einen zweiten Filter aufweist,

wobei - zumindest in einem ersten Gleichspannungs-Betriebszustand - bei Betrieb des Schienenfahrzeugs an einem Gleichspannungsnetz,

- die elektrische Anschlussverbindung den elektrischen Netzanschluss oder einen zweiten der elektrischen Netzanschlüsse mit der Gleichspannungsseite des zweiten Gleichrichters eines ersten der Module verbindet,
- die Primärseite des Transformators des ersten Moduls mit der Primärseite des Transformators eines zweiten der Module verbunden ist, und zwar indirekt über die Wechselrichter des ersten Moduls und des zweiten Moduls,
- die Gleichspannungsseite des zweiten Gleichrichters des zweiten Moduls mit dem motorseitigen elektrischen Anschluss zum Anschließen der Anordnung an den Gleichspannungszwischenkreis verbunden ist,
- sodass Energie zum Betreiben des zumindest einen Fahrmotors aus dem elektrischen Energieversorgungsnetz über den zweiten Gleichrichter des ersten Moduls, die Sekundärseite des Transformators des ersten Moduls, die Primärseite des Transformators des ersten Moduls, den Wechselrichter des ersten Moduls, den Wechselrichter des zweiten Moduls, die Primärseite des Transformators des zweiten Moduls, die Sekundärseite des Transformators des zweiten Moduls und den zweiten Gleichrichter des zweiten Moduls in den Gleichspannungszwischenkreis übertragen wird.

Ferner wird ein Verfahren zum Betreiben eines Schienenfahrzeugs mittels einer elektrischen Energieversorgungsanordnung an elektrischen Versorgungsnetzen vorgeschlagen, wobei:

• die Energieversorgungsanordnung über zumindest einen elektrischen Netzanschluss an ein elektrisches Energieversorgungsnetz angeschlossen wird,
• die Energieversorgungsanordnung über einen motorseitigen elektrischen Anschluss an einen Gleichspannungszwischenkreis angeschlossen wird, an den wiederum zumindest ein Traktionswechselrichter zum Betreiben zumindest eines Fahrmotors angeschlossen ist oder wird,
• eine Gleichrichteranordnung der Energieversorgungsanordnung zum Betrieb des Schienenfahrzeugs an einem Wechselspannungsnetz über einen ersten Filter mit dem elektrischen Netzanschluss oder mit einem der elektrischen Netzanschlüsse verbunden wird, wobei die Gleichrichteranordnung eine Mehrzahl von Modulen aufweist, in denen jeweils ein erster Gleichrichter über einen Wechselrichter, der an die Primärseite eines Transformators angeschlossen ist, und den Transformator mit einem zweiten Gleichrichter verbunden ist, wobei die Sekundärseite des Transformators mit dem zweiten Gleichrichter verbunden ist und der erste Gleichrichter an seiner Wechselspannungsseite über den ersten Filter mit dem elektrischen Netzanschluss oder mit dem einen der elektrischen Netzanschlüsse verbunden wird, wobei der zweite Gleichrichter an seiner Gleichspannungsseite mit dem motorseitigen elektrischen Anschluss verbunden wird und wobei die Wechselspannungsanschlüsse der ersten Gleichrichter in Serie geschaltet werden oder sind, wobei - zum Betrieb des Schienenfahrzeugs an einem Wechselspannungsnetz - die Gleichspannungsanschlüsse der zweiten Gleichrichter parallel geschaltet werden,
• - zumindest in einem ersten Gleichspannungs-Betriebszustand - zum Betrieb des Schienenfahrzeugs an einem Gleichspannungsnetz,
- der elektrische Netzanschluss oder ein zweiter der elektrischen Netzanschlüsse über einen zweiten Filter mit dem elektrischen Versorgungsnetz verbunden wird,
- der elektrische Netzanschluss oder der zweite der elektrischen Netzanschlüsse mit der Gleichspannungsseite des zweiten Gleichrichters eines ersten der Module verbunden wird,
- die Primärseite des Transformators des ersten Moduls mit der Primärseite des Transformators eines zweiten der Module verbunden wird, und zwar indirekt über die Wechselrichter des ersten Moduls und des zweiten Moduls,
- die Gleichspannungsseite des zweiten Gleichrichters des zweiten Moduls mit dem motorseitigen elektrischen Anschluss zum Anschließen der Anordnung an den Gleichspannungszwischenkreis verbunden wird,

sodass beim Betrieb des Schienenfahrzeugs an einem Gleichspannungsnetz in dem zumindest einen ersten Gleichspannungs-Betriebszustand Energie zum Betreiben des zumindest einen Fahrmotors aus dem elektrischen Energieversorgungsnetz über den zweiten Gleichrichter des ersten Moduls, die Sekundärseite des Transformators des ersten Moduls, die Primärseite des Transformators des ersten Moduls, den Wechselrichter des ersten Moduls, den Wechselrichter des zweiten Moduls, die Primärseite des Transformators des zweiten Moduls, die Sekundärseite des Transformators des zweiten Moduls und den zweiten Gleichrichter des zweiten Moduls in den Gleichspannungszwischenkreis übertragen wird.

Außerdem wird ein Verfahren zum Herstellen einer elektrischen Energieversorgungsanordnung für Antriebseinrichtungen vorgeschlagen, zum Betreiben eines Schienenfahrzeugs an elektrischen Versorgungsnetzen, aufweisend:

- Bereitstellen zumindest eines elektrischen Netzanschlusses zum Anschließen der Anordnung an ein elektrisches Energieversorgungsnetz,
- Bereitstellen eines motorseitigen elektrischen Anschlusses zum Anschließen der Anordnung an einen Gleichspannungszwischenkreis, an den wiederum zumindest ein Traktionswechselrichter zum Betreiben zumindest eines Fahrmotors anschließbar ist,
- Bereitstellen einer Gleichrichteranordnung zum Betrieb des Schienenfahrzeugs an einem Wechselspannungsnetz und Verbinden der Gleichrichteranordnung über einen ersten Filter mit dem elektrischen Netzanschluss oder mit einem der elektrischen Netzanschlüsse, wobei die Gleichrichteranordnung eine Mehrzahl von Modulen aufweist, in denen jeweils ein erster Gleichrichter über einen Wechselrichter, der an die Primärseite eines Transformators angeschlossen ist, und den Transformator mit einem zweiten Gleichrichter verbunden ist, wobei die Sekundärseite des Transformators mit dem zweiten Gleichrichter verbunden ist und der erste Gleichrichter an seiner Wechselspannungsseite über den ersten Filter mit dem elektrischen Netzanschluss oder mit dem einen der elektrischen Netzanschlüsse verbunden wird, wobei der zweite Gleichrichter an seiner Gleichspannungsseite mit dem motorseitigen elektrischen Anschluss verbunden wird und wobei die Wechselspannungsanschlüsse der ersten Gleichrichter in Serie geschaltet werden, wobei eine Steuerung und eine von der Steuerung gesteuerte Schalteranordnung vorgesehen werden, die - bei Betrieb des Schienenfahrzeugs an einem Wechselspannungsnetz - die Gleichspannungsanschlüsse der zweiten Gleichrichter parallel schalten,
- Bereitstellen einer elektrischen Anschlussverbindung zum Betrieb des Schienenfahrzeugs an einem Gleichspannungsnetz, wobei die elektrische Anschlussverbindung einen zweiten Filter aufweist,

wobei die Steuerung und die Schalteranordnung ausgestaltet werden - zumindest in einem ersten Gleichspannungs-Betriebszustand - bei Betrieb des Schienenfahrzeugs an einem Gleichspannungsnetz,

- den elektrischen Netzanschluss oder einen zweiten der elektrischen Netzanschlüsse über die elektrische Anschlussverbindung mit der Gleichspannungsseite des zweiten Gleichrichters eines ersten der Module zu verbinden,
- die Primärseite des Transformators des ersten Moduls mit der Primärseite des Transformators eines zweiten der Module zu verbinden, und zwar indirekt über die Wechselrichter des ersten Moduls und des zweiten Moduls,
- die Gleichspannungsseite des zweiten Gleichrichters des zweiten Moduls mit dem motorseitigen elektrischen Anschluss zum Anschließen der Anordnung an den Gleichspannungszwischenkreis zu verbinden,
- sodass Energie zum Betreiben des zumindest einen Fahrmotors aus dem elektrischen Energieversorgungsnetz über den zweiten Gleichrichter des ersten Moduls, die Sekundärseite des Transformators des ersten Moduls, die Primärseite des Transformators des ersten Moduls, den Wechselrichter des ersten Moduls, den Wechselrichter des zweiten Moduls, die Primärseite des Transformators des zweiten Moduls, die Sekundärseite des Transformators des zweiten Moduls und den zweiten Gleichrichter des zweiten Moduls in den Gleichspannungszwischenkreis übertragen wird.

Ausgestaltungen des Herstellungsverfahrens und des Betriebsverfahrens ergeben sich analog aus der Beschreibung von Ausgestaltungen der Energieversorgungsanordnung.

Insbesondere kann zur Verbindung der Primärseiten der Transformatoren des ersten und zweiten Moduls die Gleichspannungsseite des Wechselrichters des ersten Moduls mit der Gleichspannungsseite des Wechselrichters des zweiten Moduls verbunden werden/sein, und zwar direkt über zumindest eine elektrische Kopplungsverbindung zur Kopplung der Gleichspannungsseiten der Wechselrichter und/oder indirekt über den ersten Gleichrichter des ersten Moduls und über den ersten Gleichrichter des zweiten Moduls.

Die Energieversorgungsanordnung kann einen einzigen elektrischen Netzanschluss aufweisen, über den sowohl beim Betrieb an einem Wechselspannungsnetz als auch beim Betrieb an einem Gleichspannungsnetz der Kontakt zu dem Netz hergestellt wird. Der Netzanschluss kann z.B. ein Anschluss zum Kontaktieren eines Stromabnehmers sein, mit dem der Strom aus dem Versorgungsnetz abgenommen wird (z.B. ein Pantograph). Der Netzanschluss kann aber auch der Kontaktpunkt des Stromabnehmers mit einem Fahrdraht oder einer Stromschiene des Netzes sein. Ferner ist es möglich, dass der Netzanschluss die Energieversorgungsanordnung mit einer Empfängerschaltung verbindet, welche durch induktive Energieübertragung Energie von dem Versorgungsnetz empfängt.

Die Energieversorgungsanordnung kann zusätzlich zu einem solchen Netzanschluss zumindest einen weiteren Netzanschluss aufweisen, so dass zumindest für den Betrieb an einem Wechselspannungsnetz ein erster Netzanschluss zur Verfügung steht und zum Betrieb an zumindest einem Gleichspannungsnetz ein anderer Netzanschluss zur Verfügung steht. Für den zumindest einen weiteren Netzanschluss gilt insbesondere das gleiche, was zuvor für den einzigen Netzanschluss beschrieben wurde. Z.B. kann für den Betrieb an einem Wechselspannungsnetz ein erster Stromabnehmer vorhanden sein und für den Betrieb an einem Gleichspannungsnetz ein zweiter Stromabnehmer.

Der motorseitige elektrische Anschluss zum Anschließen der Anordnung an einem Gleichspannungszwischenkreis weist insbesondere zwei Pole auf, die während des Betriebes auf unterschiedlichen elektrischen Potentialen liegen, einem höheren und einem niedrigeren elektrischen Potential, entsprechend der Spannung im Gleichspannungszwischenkreis. Wie noch näher beschrieben wird, kann auch die Sekundärseite des Transformators, die mit dem Gleichspannungsnetz verbunden wird, lediglich mit einem der beiden Pole des sekundärseitigen Anschlusses mit dem Gleichspannungsnetz verbunden werden und kann der andere Pol des Anschlusses mit einem Pol des Gleichspannungszwischenkreises verbunden werden. Wenn dabei andererseits die Sekundärseite des Transformators, der an den Gleichspannungszwischenkreis angeschlossen wird, mit beiden Polen an diesen angeschlossen wird, entsteht eine Anordnung in der Art eines Spannungsteilers. In diesem Fall kann bezüglich des Energieflusses dennoch der einpolige Anschluss der Sekundärseite des Transformators, der auch mit dem Gleichspannungsnetz verbunden ist, nicht als motorseitiger elektrischer Anschluss bezeichnet werden, da Energie aus dem Gleichspannungsnetz über die Sekundärseite des zumindest einen ersten Transformators, die Primärseiten der beiden Transformatoren oder mehreren Transformatoren und die Sekundärseite zumindest eines Transformators in den Gleichspannungszwischenkreis fließt.

Varianten der Bildung eines DC/DC-Konverters aus Komponenten der Energieversorgungsanordnung, welche auch für den Betrieb am Wechselspannungsnetz genutzt wird, wurden bereits oben beschrieben. Daraus ergibt sich bezüglich dem motorseitigen elektrischen Anschluss, dass je nach Gestaltung des DC/DC-Konverters ein oder mehrere Sekundärseiten von Transformatoren an den motorseitigen Anschluss angeschlossen sein können. Insbesondere können die Sekundärseiten von mehreren Transformatoren parallel zueinander an dem motorseitigen elektrischen Anschluss angeschlossen sein. Dadurch können höhere Energieströme über den DC/DC-Konverter in den Gleichspannungszwischenkreis fließen. Entsprechendes gilt für den Anschluss der Sekundärseiten von mehreren Transformatoren an das Gleichspannungsnetz.

Wenn von den Primärseiten und Sekundärseiten von Transformatoren der Energieversorgungsanordnung die Rede ist, sind dabei häufig aus Gründen der Einfachheit die zusätzlich vorhandenen Konverter an der Primärseite und Sekundärseite des Transformators nicht erwähnt. Wie oben beschrieben ist es möglich, dass sich an der Primärseite und/oder Sekundärseite nicht nur ein Konverter befindet, sondern mehrere. Auch kann ein Konverter auf der Primärseite oder Sekundärseite dem Anschluss einer Mehrzahl von Transformatoren dienen. Z.B. können zwei Transformatoren über einen einzigen gemeinsamen Gleichrichter mit dem Gleichspannungsnetz oder dem Gleichspannungszwischenkreis verbunden sein.

Dementsprechend sind die genannten Module dadurch gekennzeichnet, dass sie an der Wechselspannungsseite der Energieversorgungsanordnung genau einen ersten Gleichrichter aufweisen.

Wie sich auch aus der obigen Beschreibung ergibt, ist unter dem zumindest einen ersten Gleichspannungs-Betriebszustand ein Betriebszustand während des Betriebes an einem Gleichspannungsnetz zu verstehen, wobei Einrichtungen der Energieversorgungsanordnung, die zumindest zwei Transformatoren und die zugehörigen Konverter einschließen, als DC/DC-Konverter genutzt werden. Dabei ist die Nutzung der ersten Gleichrichter an der Wechselspannungsseite der Energieversorgungsanordnung optional möglich. "Optional" bedeutet dabei, dass es auch Ausführungsformen der Erfindung gibt, bei denen die ersten Gleichrichter nicht für den DC/DC-Konverter genutzt werden.

Je nach Ausgestaltung kann es lediglich einen ersten Gleichspannungs-Betriebszustand geben, z.B. für den Betrieb an einem Gleichspannungsnetz mit einer bestimmten, vorgegebenen Nenn-Betriebsspannung. Es kann aber auch mehr als einen ersten Gleichspannungs-Betriebszustand geben, z.B. für den Betrieb an verschiedenen Gleichspannungsnetzen mit unterschiedlichen Nenn-Betriebsspannungen. Für die verschiedenen ersten Gleichspannungs-Betriebszustände können die Transformatoren und Konverter der Energieversorgungsanordnung in gleicher Weise oder in unterschiedlicher Weise miteinander verschaltet sein. Bei gleicher Verschaltung für mehrere erste Gleichspannungs-Betriebszustände kann z.B. lediglich ein unterschiedlicher Betrieb der in diesem Fall an dem DC/DC-Konverter beteiligten ersten Gleichrichter stattfinden. Hierauf wurde bereits eingegangen.

Neben einem oder mehreren ersten Gleichspannungs-Betriebszuständen kann es einen zweiten Gleichspannungs-Betriebszustand geben, in dem der Gleichspannungszwischenkreis des oder der Traktionswechselrichter direkt, d.h. nicht lediglich über zumindest einen der zweiten Gleichrichter, mit dem elektrischen Netzanschluss oder einem der elektrischen Netzanschlüsse verbunden ist.

Durch Nutzung von Transformatoren und Konvertern der Energieversorgungsanordnung, welche beim Betrieb am Wechselspannungsnetz verwendet wird und insbesondere die Transformatoren bei Frequenzen im Mittelfrequenzbereich in der Größenordnung von 10 kHz betreibt, als DC/DC-Konverter für den Betrieb am Gleichspannungsnetz wird ein zusätzlicher DC/DC-Konverter eingespart. Im Vergleich zu Lösungen, die einen wechselspannungsseitigen Eingangstransformator aufweisen, über den eine Energieversorgungsanordnung bei Betrieb am Wechselspannungsnetz galvanisch von diesem entkoppelt ist, hat die Anordnung gemäß der vorliegenden Erfindung zusätzlich den Vorteil, dass die Energieversorgungsanordnung an sich ein geringeres Gewicht aufweist, da die Transformatoren bei höheren Frequenzen als die Netzfrequenz des Versorgungsnetzes betrieben werden können.

Ferner bietet eine erfindungsgemäße Energieversorgungsanordnung die Möglichkeit, einen DC/DC-Konverter für den Betrieb an verschiedenen Gleichspannungsnetzen mit unterschiedlichen Nenn-Betriebsspannungen zu bilden und/oder zusätzlich den Betrieb des Gleichspannungszwischenkreises des oder der Traktionswechselrichter unmittelbar am Gleichspannungsnetz zu ermöglichen.

Insbesondere wird für das Umschalten zwischen den einzelnen Betriebszuständen (Betrieb am Wechselspannungsnetz, zumindest ein erster Gleichspannungs-Betriebszustand unter Verwendung der Anordnung als DC/DC-Konverter und/oder direkter Anschluss des Gleichspannungszwischenkreises an das Gleichspannungsnetz) eine Anordnung von Schaltern (im Folgenden Schalteranordnung) eingesetzt. Die Anzahl und der Anschluss der Schalter an die Anordnung hängt von der konkreten Konfiguration und von den möglichen Betriebszuständen ab. Insbesondere kann über der Schalteranordnung auf der Sekundärseite der Transformatoren zumindest teilweise ein Umschalten zwischen einem zweipoligen Anschluss an den Gleichspannungszwischenkreis zu einem Anschluss an das Gleichspannungsnetz erfolgen. Ferner kann durch verschiedene mögliche Arten von Schalteranordnungen eine Kopplung von Modulen der elektrischen Energieversorgungsanordnung auf den Primärseiten der Transformatoren stattfinden. Auf die Realisierung von solchen Schaltern zur Kopplung der Primärseiten wird noch näher eingegangen.

Vorzugsweise werden für den oder die netzseitigen, ersten Gleichrichter Halbleiterschalter, insbesondere IGBTs (Insulated Gate Bipolar Transistors), eingesetzt. Bei dem Gleichrichter oder den Gleichrichtern kann es sich insbesondere um so genannte Vierquadrantensteller handeln. Auch die zwischenkreisseitigen, zweiten Gleichrichter können Vierquadrantensteller sein, alternativ aber auch andere Gleichrichter, z. B. mit lediglich einer Serienschaltung von Schaltern (Halbbrücken-Gleichrichter). In jedem Fall wird es bevorzugt, dass der oder die Wechselrichter und der oder die Gleichrichter, die galvanisch durch den Transformator voneinander getrennt sind und an dem Transformator oder den Transformatoren angeschlossen sind, ebenfalls Konverter sind, die durch Schalten von Halbleiterschaltern (insbesondere IGBTs) betrieben werden.

Bei dem ersten und/oder zweiten Filter handelt es sich z. B. um passive (nicht gesteuerte) Filter, vorzugsweise mit einer Filter-Induktivität. Unter einer Filter-Induktivität wird eine Induktivität verstanden, die zum Zweck der Reduzierung oder Eliminierung von Störsignalen vorgesehen ist. Typischerweise wird als Filter-Induktivität eine entsprechende Spule oder Anordnung von Spulen eingesetzt. Der Filter kann allgemeiner formuliert eine Anordnung von passiven (nicht gesteuerten) elektrischen Bauelementen sein, insbesondere mit zumindest einer Filter-Induktivität und/oder anderen elektrischen Bauelementen, wie zumindest einem Kondensator und zumindest einem Widerstand.

Vorzugsweise sind die Module in gleicher Weise realisiert, d. h. weisen die gleichen Bauteile in gleicher Anordnung auf. Dies ist jedoch nicht zwingend erforderlich. Insbesondere um den Betrieb an Wechselspannungsnetzen mit verschiedener Nennspannung zu ermöglichen, können bei Bedarf Module abgeschaltet oder zugeschaltet werden. Bei abgeschalteten Modulen befindet sich der netzseitige, erste Gleichrichter nicht mehr in der Reihenschaltung der Gleichrichter der verschiedenen Module. Auch für den Betrieb DC/DC-Konverter können einzelne Module oder Teile davon hinzugeschaltet oder abgeschaltet werden.

Der zumindest eine Transformator, der in jedem Modul vorhanden ist, hat die Funktion einer galvanischen Trennung, wie es beim Betrieb an Wechselspannungsnetzen gefordert ist. Neben den genannten Bauteilen, die in einem Modul eingesetzt werden, kann das Modul weitere Bauteile enthalten, insbesondere Kapazitäten und/oder Induktivitäten. Insbesondere können ein oder mehrere Kondensatoren zwischen die beiden Gleichspannungspotentiale auf der Gleichspannungsseite des ersten Gleichrichters geschaltet sein. Dies glättet die Gleichspannung und ist insbesondere auch beim Betrieb als DC/DC-Konverter vorteilhaft. Ferner kann zumindest in einem Teil der Verbindungsleitungen zwischen dem Wechselrichter eines Moduls und dem Transformator sowie zwischen dem zweiten Gleichrichter und dem Transformator jeweils eine Kapazität (z. B. ein oder mehrere Kondensatoren) vorgesehen sein. Diese Kapazitäten können so auf die anderen elektrischen Eigenschaften des Wechselspannungsteils des Moduls abgestimmt werden und die Gleichrichter und Wechselrichter können so betrieben werden, dass die Frequenz der Wechselspannung am Transformator eine Resonanzfrequenz des Wechselspannungsteils ist. Dadurch werden die Übertragungsverluste der Energieübertragung über den Transformator verringert. Auch können bei Resonanz Wechselrichter und Gleichrichter besonders effektiv, d. h. mit geringen Schaltverlusten betrieben werden.

Beim Betrieb an Wechselspannungsnetzen ist es üblich, einen zwischen Gleichspannungsleitungen der Energieversorgungsanordnung geschalteten so genannten Saugkreis mit einer Induktivität und einer in Reihe geschalteten Kapazität vorzusehen. Der Saugkreis kann sich im Bereich des Gleichspannungszwischenkreises befinden oder im Gleichspannungsteil eines oder mehrerer Module der Gleichrichteranordnung. Im Betrieb an einem Gleichspannungsnetz kann die Induktivität als zweiter Filter (oder Teil des zweiten Filters) in der elektrischen Verbindung zwischen Gleichspannungszwischenkreis genutzt werden. Auch die Kapazität kann z. B. als Glättungskondensator oder Energiespeicher genutzt werden. Um die Bauteile für die unterschiedlichen Zwecke nutzen zu können, können entsprechende Schalter vorgesehen sein, die beim Wechsel zwischen dem Betrieb an einem Wechselspannungsnetz auf einen Betrieb an einem Gleichspannungsnetz oder umgekehrt umgeschaltet werden.

Bei einer bevorzugten Ausgestaltung der Energieversorgungsanordnung bei/für Betrieb des Schienenfahrzeugs in dem zumindest einen ersten Gleichspannungs-Betriebszustand ist/wird die Gleichspannungsseite des zweiten Gleichrichters des ersten Moduls außer mit der elektrischen Anschlussverbindung auch mit einem von zwei Potenzialen des motorseitigen elektrischen Anschlusses zum Anschließen der Anordnung an den Gleichspannungszwischenkreis verbunden. Insbesondere, wenn die Gleichspannungsseite des zweiten Gleichrichters des zweiten Moduls zweipolig mit den Potentialen des motorseitigen elektrischen Anschlusses damit mit dem Gleichspannungszwischenkreis verbunden ist/wird, entsteht eine Schaltung in der Art eines Spannungsteilers. Sind die Module z.B. in gleicher Weise aus derselben Art von Transformatoren und Konvertern sowie optional zusätzlichen Bauteilen zusammengeschaltet, bewirkt der Spannungsteiler eine Herabsetzung der Gleichspannung des Gleichspannungsnetzes auf die Hälfte. Vorteilhaft dabei ist insbesondere eine Ausführungsform, bei der an der Gleichspannungsseite des zweiten Gleichrichters jeweils ein Kondensator zwischen die beiden Pole geschaltet ist.

Insbesondere kann die Energieversorgungsanordnung eine elektrische Leitungsverbindung und eine elektrische Schalteranordnung aufweisen/erhalten, wobei

- bei/für Betrieb des Schienenfahrzeugs in dem zumindest einen ersten Gleichspannungs-Betriebszustand in einer ersten Schalterstellung der elektrischen Schalteranordnung der Gleichspannungszwischenkreis indirekt, d.h. lediglich über zumindest einen der zweiten Gleichrichter, mit dem motorseitigen elektrischen Anschluss verbunden ist/wird, sodass Energie zum Betreiben des zumindest einen Fahrmotors aus dem elektrischen Energieversorgungsnetz über den zweiten Gleichrichter des ersten Moduls den Wechselrichter des ersten Moduls, den Wechselrichter des zweiten Moduls und den zweiten Gleichrichter des zweiten Moduls in den Gleichspannungszwischenkreis übertragen wird,

- bei/für Betrieb des Schienenfahrzeugs in einem zweiten Gleichspannungs-Betriebszustand in einer zweiten Schalterstellung der elektrischen Schalteranordnung der Gleichspannungszwischenkreis über die elektrische Leitungsverbindung direkt, d.h. nicht lediglich über zumindest einen der zweiten Gleichrichter, mit dem elektrischen Netzanschluss oder einem der elektrischen Netzanschlüsse verbunden ist/wird, sodass Energie zum Betreiben des zumindest einen Fahrmotors aus dem elektrischen Energieversorgungsnetz direkt über die elektrische Leitungsverbindung in den Gleichspannungszwischenkreis übertragen wird.

In einem bzw. für einen vorgegebenen ersten Gleichspannungs-Betriebszustand kann eine der elektrischen Kopplungsverbindungen die Gleichspannungsseite des Wechselrichters des ersten Moduls indirekt über einen Halbleiterschalter des ersten Gleichrichters des ersten Moduls und über einen Halbleiterschalter des ersten Gleichrichters des zweiten Moduls mit der Gleichspannungsseite des Wechselrichters des zweiten Moduls verbinden, wobei der Halbleiterschalter des ersten Gleichrichters des ersten Moduls und der Halbleiterschalter des ersten Gleichrichters des zweiten Moduls während des vorgegebenen ersten Gleichspannungs-Betriebszustandes permanent eingeschaltet sind. Dadurch kann auf einen zusätzlichen Schalter verzichtet werden. Die Steuerungen des ersten Gleichrichters sind lediglich entsprechend auszugestalten, damit zu Beginn des vorgegebenen ersten Gleichspannungs-Betriebszustandes die Halbleiterschalter der ersten Gleichrichter eingeschaltet werden und eingeschaltet bleiben.

Insbesondere wenn die an dem motorseitigen elektrischen Anschluss anliegende Spannung variabel sein soll oder der DC/DC-Konverter für den Betrieb an Gleichspannungsnetzen mit verschiedenen Nenn-Betriebsspannungen verwendbar sein soll, kann die Energieversorgungsanordnung eine Steuereinrichtung zum Steuern des Betriebes der ersten Gleichrichter des ersten und zweiten Moduls aufweisen/erhalten, während das Schienenfahrzeug in dem zumindest einen ersten Gleichspannungs-Betriebszustand betrieben wird, wobei die Steuereinrichtung ausgestaltet ist/wird, durch Steuern von Schaltzeitpunkten von Halbleiterschaltern zumindest eines der ersten Gleichrichter an der Gleichspannungsseite des Wechselrichters des zweiten Moduls eine unter Berücksichtigung der Gleichspannung des elektrischen Energieversorgungsnetzes und einer gewünschten Gleichspannung in dem Gleichspannungszwischenkreis vorgegebene Gleichspannung zu erzeugen, sodass die gewünschte Gleichspannung in dem Gleichspannungszwischenkreis erzielt wird.

Es gibt verschiedene Verfahrensweisen, wie die Halbleiterschalter der ersten Gleichrichter zum Erreichen dieses Ziels betrieben werden können. Insbesondere ist es gemäß einer ersten Verfahrensweise möglich, dass von den ersten Gleichrichtern des ersten und zweiten Moduls jeweils nur ein Teil der Halbleiterschalter wiederholt (insbesondere in der Art eines Hochsetzstellers oder Tiefsetzstellers) ein- und ausgeschaltet wird, um die gewünschte Gleichspannung zu erzeugen. Der andere Teil der Halbleiterschalter bleibt während des Betriebes als DC/DC-Konverter permanent ausgeschaltet. Z.B. können im Falle der Ausgestaltung der ersten Gleichrichter als Gleichrichter mit zwei parallel geschalteten Brücken, die jeweils zwei in Reihe geschaltete Halbleiterschalter aufweisen, die Schalter jeweils einer Brücke dauerhaft ausgeschaltet bleiben, während zumindest ein Schalter der anderen Brücke wiederholt ein- und ausgeschaltet wird. Bei einer anderen Verfahrensweise werden jedoch alle Halbleiterschalter oder zumindest die Halbleiterschalter von verschiedenen Brücken der ersten Gleichrichter wiederholt ein- und ausgeschaltet, um während des Betriebes als DC/DC-Konverter die gewünschte Gleichspannung in dem Gleichspannungszwischenkreis zu erzielen. Auf konkrete Ausführungsbeispiele wird noch näher eingegangen.

Insbesondere wird für den Fall, dass die ersten Gleichrichter von zwei Modulen für den Betrieb als DC/DC-Konverter benutzt werden, das erste Modul über eine Induktivität mit dem zweiten Modul verbunden. Die Induktivität wird wie an sich aus dem Betrieb von Hochsetzstellern und Tiefsetzstellern bekannt ist, für die temporäre Speicherung von elektrischer Energie genutzt, die das Hochsetzen oder Tiefsetzen der Spannung ermöglicht. Anders ausgedrückt wird die über die Induktivität abfallende Spannung durch entsprechende Schaltfolgen der Schalter temporär erhöht oder erniedrigt, um die gewünschte Gleichspannung zu erzeugen.

Ausführungsbeispiele der Erfindung werden nun unter Bezugnahme auf die beigefügte Zeichnung beschrieben. Die einzelnen Figuren der Zeichnung zeigen:

Fig. 1    das elektrische Schaltungsdiagramm einer Energieversorgungsanordnung für ein Schienenfahrzeug, wobei die Anordnung an ein Energieversorgungsnetz und an einen Gleichspannungszwischenkreis mit einem daran angeschlossenen Traktionsstromrichter anschließbar ist,

Fig. 2    die Energieversorgungsanordnung gemäß Fig. 1 in einem Betriebszustand, in dem sie an ein Wechselspannungsnetz angeschlossen ist,

Fig. 3    die Schaltungsanordnung gemäß Fig. 1 und Fig. 2 in einem Betriebszustand, in dem sie an ein Gleichspannungsnetz angeschlossen ist, wobei Module der Energieversorgungsanordnung als DC/DC-Konverter verwendete werden,

Fig. 4    Beispiele für mögliche Details des elektrischen Schaltungsdiagramms eines Moduls der Anordnung gemäß Fig. 1 bis 3,

Fig. 5-10    mögliche Ausgestaltungen von Schaltern zur Kopplung der Primärseiten der Transformatoren in einem ersten und einem zweiten Modul,

Fig. 11    eine bevorzugte Ausgestaltung eines Paars von Modulen, wobei eine der beiden Kopplungen auf der Primärseite der Transformatoren mittels jeweils eines Halbleiterschalters der ersten Gleichrichter der Module hergestellt wird, und

Fig. 12    ein Paar von gekoppelten Modulen, wobei auch die ersten Gleichrichter der Module als Teile des DC/DC-Konverters verwendet werden, wenn die Schaltungsanordnung am Gleichspannungsnetz betrieben wird.

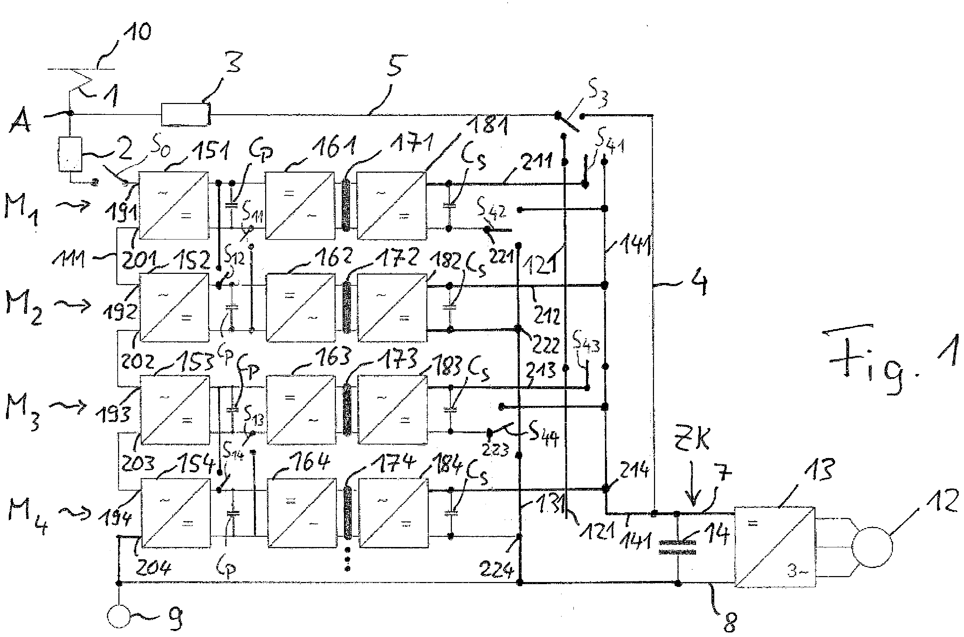

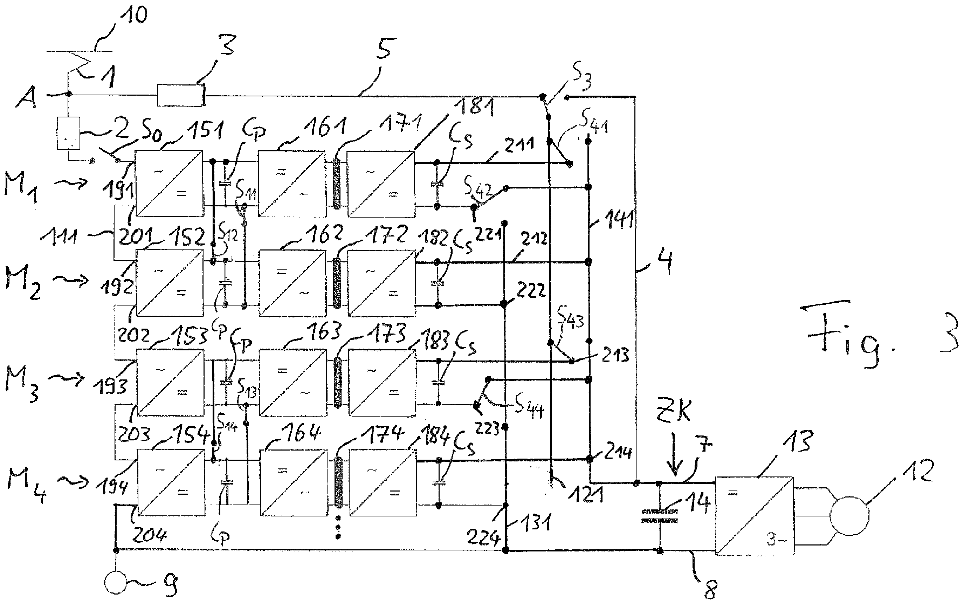

Die in Fig. 1 dargestellte Energieversorgungsanordnung ist über einen Netzanschluss A und einen Stromabnehmer 1 an ein elektrisches Energieversorgungsnetz 10 anschließbar. Dabei kann das Energieversorgungsnetz ein Gleichspannungsnetz oder ein Wechselspannungsnetz sein. Für den Betrieb an einem Gleichspannungsnetz ist der Stromabnehmer 1 über eine Induktivität 3 und eine elektrische Verbindung 5 mit einem Schalter $S_3$ verbunden. Je nach Schalterstellung des Schalters $S_3$ kann die elektrische Verbindung 5 entweder direkt mit einem ersten Potential 7 eines Gleichspannungszwischenkreises ZK verbunden werden, oder wie noch näher anhand von Fig. 3 erläutert wird mit einer elektrischen Leitung 121. Das andere Potential 8 des Gleichspannungszwischenkreises ZK ist über zumindest ein Rad 9 des Schienenfahrzeugs mit der in Fig. 1 nicht dargestellten Fahrschiene elektrisch verbunden. Zwischen die Potentiale 7, 8 des Gleichspannungszwischenkreises ZK ist eine Kapazität 14 geschaltet. Sie dient der Glättung von Spannungsschwankungen und als temporärer Energiespeicher. Weitere mögliche Bestandteile der Schaltungsanordnung, wie z.B. ein Saugkreis mit einer in Reihe geschalteten Kapazität und einer Induktivität zwischen den Potentialen 7, 8 sind in Fig. 1 nicht dargestellt.

An den Gleichspannungszwischenkreis ZK ist ein Traktionswechselrichter 13 angeschlossen, der die Gleichspannung umrichtet und einen Fahrmotor 12 mit elektrischer Energie versorgt. Alternativ können mehrere Traktionswechselrichter an denselben Gleichspannungszwischenkreis angeschlossen sein und/oder ein Traktionswechselrichter mehr als einen Fahrmotor mit Energie versorgen. Auch können mehr als ein Gleichspannungszwischenkreis vorgesehen sein. Auf andere mögliche Varianten der Schaltungsanordnung wurde bereits vor der Figurenbeschreibung eingegangen. Insbesondere kann statt des einen einzigen Netzanschlusses A zumindest ein weiterer Netzanschluss vorgesehen sein, über den z.B. grundsätzlich jeglicher Betrieb an Gleichspannungsnetzen stattfindet. In diesem Fall ist z.B. die elektrische Verbindung 5 statt mit dem Netzanschluss A für den Wechselspannungsbetrieb mit dem zusätzlichen Netzanschluss für den Gleichspannungsbetrieb verbunden. Optional kann in diesem Fall für den Betrieb an Gleichspannungsnetzen zumindest ein weiterer Stromabnehmer vorhanden sein.

Für den Betrieb an einem Wechselspannungsnetz ist der Stromabnehmer 1 über eine Filter-Induktivität 2 und einen Schalter $S_0$ mit einem ersten elektrischen Anschluss 191 eines Moduls $M_1$ verbunden. Über einen zweiten elektrischen Anschluss 201 ist das Modul $M_1$ mit einem ersten elektrischen Anschluss 192 eines zweiten Moduls $M_2$ verbunden. Ein zweiter elektrischer Anschluss 202 des zweiten Moduls $M_2$ ist mit einem ersten elektrischen Anschluss 193 eines dritten Moduls $M_3$ verbunden. Ein zweiter elektrischer Anschluss 203 des dritten Moduls $M_3$ ist mit einem ersten elektrischen Anschluss 194 eines vierten Moduls $M_4$ verbunden. Ein zweiter elektrischer Anschluss 204 des vierten Moduls $M_4$ ist optional über weitere, nicht in Fig. 1 dargestellte Module und über zumindest das Rad 9 mit der Fahrschiene verbunden. In verschiedenen Ausführungsformen einer solchen Schaltungsanordnung kann die Anzahl der Module M variieren. Ferner können in derselben Schaltungsanordnung Module bei Bedarf hinzu oder abgeschaltet werden. Ein abgeschaltetes Modul ist nicht mehr Teil der Reihenschaltung von dem Stromabnehmer über die Induktivität 2, jeweils den ersten elektrischen Anschluss 19 sowie den zweiten elektrischen Anschluss 20 der Module M und das Rad 9 zur Fahrschiene. Ein zugeschaltetes Modul ist jedoch Teil dieser Reihenschaltung.

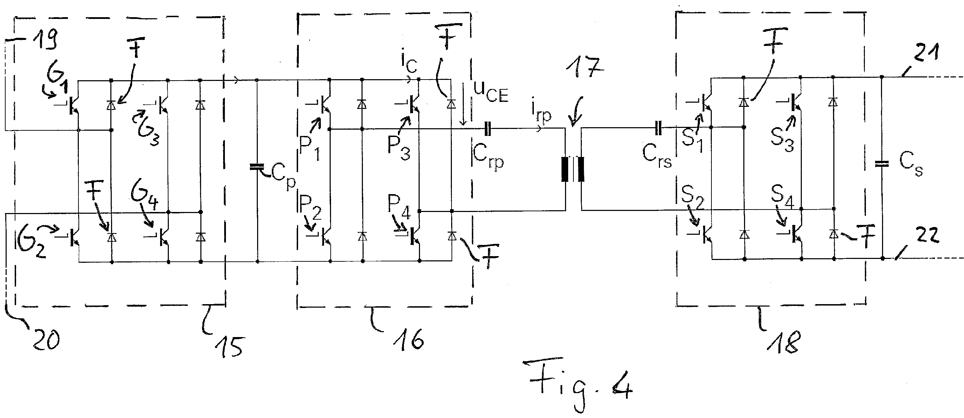

Jedes Modul M weist einen ersten Gleichrichter 151, 152, 153, 154 (z. B. einen Vierquadrantensteller) auf, der mit dem ersten elektrischen Anschluss 191, 192, 193, 194 (bzw. 19 in Fig. 4) und dem zweiten elektrischen Anschluss 201, 202, 203, 204 (bzw. 20 in Fig. 4) verbunden ist.

Die einander entsprechenden Bauteile und Anschlüsse der Module, die mit Bezugsziffern bezeichnet sind, sind mit Ausnahme der letzten Ziffer des jeweiligen Bezugszeichens mit denselben Ziffern bezeichnet. In der letzten Ziffer der Bezugszeichen steht die Nummer des Moduls. Im Folgenden wird zumindest teilweise auf die Angabe der letzten Ziffer verzichtet, da die Module gleich aufgebaut sind.

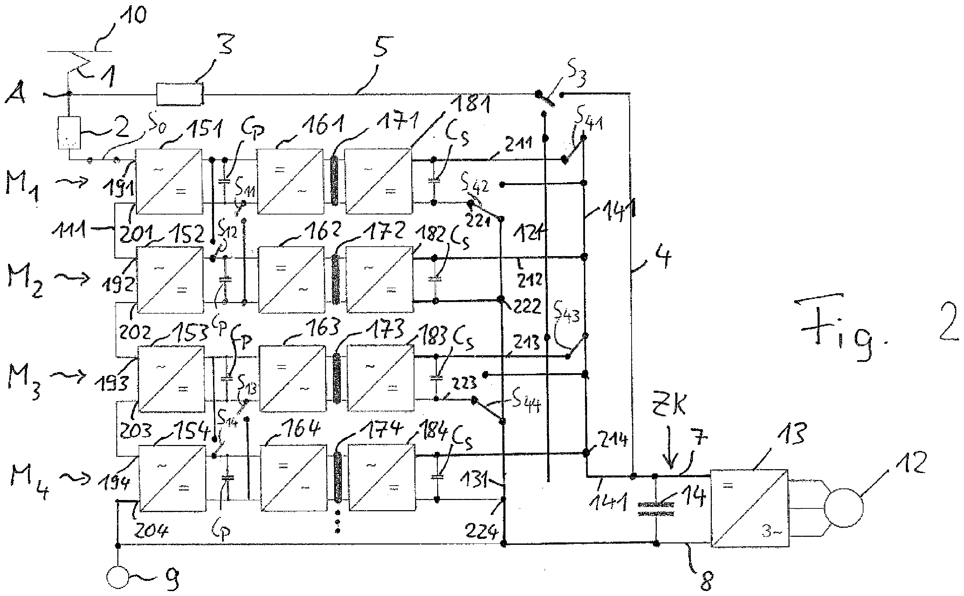

An der Gleichspannungsseite des ersten Gleichrichters 15 befinden sich zwei Gleichspannungsleitungen auf unterschiedlichem Potential, zwischen denen eine Kapazität $C_P$ geschaltet ist und an die die Gleichspannungsseite eines Wechselrichters 16 angeschlossen ist. Die Wechselspannungsseite des Wechselrichters 16 ist über einen Transformator 17 mit der Wechselspannungsseite eines zweiten Gleichrichters 18 verbunden. Abhängig davon, ob der Transformator 17 mit den angeschlossenen Konvertern 16 und 18 einen Serienresonanzkonverter bilden soll oder nicht, können die Konverter 16, 18 über zumindest einen Kondensator mit dem Transformator verbunden sein, wie z. B. noch anhand von Fig. 4 beschrieben wird. Die Gleichspannungsseite des zweiten Gleichrichters 18 ist über zwei Gleichspannungsleitungen mit einem dritten elektrischen Anschluss 21 bzw. einem vierten elektrischen Anschluss 22 des Moduls M verbunden. Zwischen diese Gleichspannungsleitungen ist eine Kapazität $C_S$ geschaltet. Die dritten elektrischen Anschlüsse 21 der Module M sind bei Betrieb am Wechselspannungsnetz (Fig. 2) mit dem ersten Potential 7 des Gleichspannungszwischenkreises ZK verbunden. Die vierten elektrischen Anschlüsse der Module M sind bei Betrieb am Wechselspannungsnetz (Fig. 2) mit dem zweiten elektrischen Potential 8 des Gleichspannungszwischenkreises verbunden. Zwischen den Potentialen 7, 8 des Gleichspannungszwischenkreises besteht die elektrische Spannung $U_{ZK}$.

Ein Ausführungsbeispiel für den detaillierten elektrischen Aufbau eines der Module M ist in Fig. 4 dargestellt. Der erste Gleichrichter 15, der auf seiner Wechselspannungsseite mit dem ersten Anschluss 19 und dem zweiten Anschluss 20 verbunden ist, weist zwei Zweige auf, in denen jeweils zwei Halbleiterschalter $G_1$, $G_2$; $G_3$, $G_4$ in Reihe geschaltet sind. Der erste elektrische Anschluss 19 ist mit einem Anschlusspunkt zwischen den zwei Halbleiterschaltern des ersten Zweiges verbunden. Der zweite elektrische Anschluss 20 ist mit einem Anschlusspunkt zwischen den zwei Halbleiterschaltern des zweiten Zweiges verbunden. Parallel zu jedem Halbleiterschalter ist eine Freilaufdiode F geschaltet, wobei nicht alle der in Fig. 4 dargestellten Dioden explizit mit dem Bezugszeichen F bezeichnet sind. Die Enden der beiden parallel geschalteten Zweige mit den Halbleiterschaltern G sind an die elektrischen Anschlüsse der Gleichspannungsseite des Gleichrichters 15 angeschlossen, zwischen die die Kapazität $C_P$ geschaltet ist. Der Gleichrichter 15 wird als Vierquadrantensteller betrieben, wenn die Energieversorgungsanordnung und damit das Schienenfahrzeug an einem Wechselspannungsnetz betrieben werden.

Der Wechselrichter 16 ist z. B. wie der Gleichrichter 15 aufgebaut, wobei die Gleichspannungsseiten des Gleichrichters 15 und des Wechselrichters 16 miteinander verbunden sind. Die Halbleiterschalter des Wechselrichters 16 sind mit den Bezugszeichen $P_1$, $P_2$, $P_3$, $P_4$ bezeichnet. Die Wechselspannungsseite des Wechselrichters 16 ist über eine Kapazität $C_{rp}$ mit der Primärseite eines Transformators 17 verbunden. Die Sekundärseite des Transformators 17 ist über eine Kapazität $C_{RS}$ mit dem zweiten Gleichrichter 18 verbunden, der wie der erste Gleichrichter 15 aufgebaut ist. Seine Halbleiterschalter sind mit den Bezugszeichen $S_1$, $S_2$, $S_3$, $S_4$ bezeichnet. An der Gleichspannungsseite des zweiten Gleichrichters 18 befindet sich die Kapazität $C_S$.

Beim Betrieb an einem Wechselspannungsnetz wird die zwischen dem ersten 19 und dem zweiten 20 elektrischen Anschluss abfallende Wechselspannung von dem Gleichrichter 15 gleichgerichtet, dem Wechselrichter 16 zugeführt, der die Gleichspannung zu einer Wechselspannung im Mittelfrequenzbereich umrichtet und der Primärseite des Transformators 17 zuführt. Der Transformator 17 wird vorzugsweise mit einem Übersetzungsverhältnis von 1 : 1 betrieben, d.h. die Spannung wird nicht verändert, oder er wird z. B. mit einem Übersetzungsverhältnis von 2 : 1 betrieben. Alternativ kann der Transformator 17 jedoch auch ein anderes Übersetzungsverhältnis aufweisen. Auf der Sekundärseite des Transformators 17 wird die Wechselspannung dem zweiten Gleichrichter 18 zugeführt, der die Wechselspannung zu der Gleichspannung gleichrichtet, die dem Gleichspannungszwischenkreis ZK zugeführt wird. Dadurch, dass die Module M an ihrer Netzseite in Reihe geschaltet sind, aber auf ihrer Gleichspannungszwischenkreisseite parallel geschaltet sind, kann eine sehr hohe Wechselspannung von z.B. 15 kV in eine Gleichspannung am Gleichspannungszwischenkreis im Bereich von 1 kV bis 3 kV umgewandelt werden, ohne die maximal zulässige Betriebsspannung der Halbleiterschalter zu überschreiten.

Wenn die Energieversorgungsanordnung gemäß Fig. 1 an einem Gleichspannungsnetz betrieben wird, wird die für den Zwischenkreis ZK benötigte Energie über die elektrische Verbindung 5 übertragen. Im einfachsten Fall, der oben als zweiter Gleichspannungs-Betriebszustand bezeichnet wurde, verbindet der Schalter $S_3$ die elektrische Verbindung 5 mit einer elektrischen Leitung 4 und damit direkt mit dem Teil des Gleichspannungszwischenkreises ZK, der auf dem Potential 7 betrieben wird. Z.B. ist der Traktionswechselrichter 13 so ausgelegt, dass der zweite Gleichspannungs-Betriebszustand bei einem Betrieb an einem Gleichspannungsnetz mit 1,5 kV Nenn-Betriebsspannung besteht.

Im Folgenden wird auf zusätzliche Merkmale der Schaltungsanordnung gemäß Fig. 1 bis Fig. 3 eingegangen, die bisher noch nicht im Detail beschrieben wurden und dem Betrieb in zumindest einem so genannten ersten Gleichspannungs-Betriebszustand dienen, in dem Teile der Schaltungsanordnung, insbesondere Transformatoren 17 und Konverter 16, 18 sowie optional erste Gleichrichter 19 als DC/DC-Konverter verwendet werden.

Die bereits erwähnte elektrische Leitung 121 verbindet einen Kontakt des Schalters $S_3$ mit Kontakten von Schaltern $S_{41}$, $S_{43}$ (und optional weiteren solchen Schaltern, wenn mehr als die in Fig. 1 bis Fig. 3 dargestellten vier Module M vorhanden sind). Bei Betrieb am Wechselspannungsnetz (Fig. 2) ist die elektrische Leitung 121 nicht mit der elektrischen Verbindung 5 verbunden. Auch befinden sich die Schalter $S_{41}$, $S_{43}$ in diesem Fall in einem Schaltzustand, in dem die elektrischen Anschlüsse 21 der Module, also insbesondere auch der Module $M_1$ und $M_3$ über eine elektrische Leitung 141 mit dem Teil des Gleichspannungszwischenkreises ZK verbunden sind, der auf dem Potential 7 liegt.

In dem in Fig. 3 dargestellten ersten Gleichspannungs-Betriebszustand ist jedoch die elektrische Leitung 121 über den Schalter $S_3$ mit der elektrischen Verbindung 5 und damit mit dem Gleichspannungsnetz 10 verbunden. Die Schalter $S_{41}$, $S_{43}$ befinden sich in einem Schaltzustand, in dem die Anschlüsse 21 von jeweils der Hälfte der Module M mit der elektrischen Leitung 121 verbunden sind. Im Ausführungsbeispiel ist das Modul $M_1$ über den Schalter $S_{41}$ mit seinem Anschluss 211 an die elektrische Leitung 121 angeschlossen. Entsprechendes gilt für den Anschluss 213 des Moduls $M_3$, das über den Schalter $S_{43}$ mit der elektrischen Leitung 121 verbunden ist. Die elektrischen Anschlüsse 21 der anderen (aktiven) Module, im Ausführungsbeispiele Module $M_2$ und $M_4$, sind permanent mit der elektrischen Leitung 141 verbunden und liegen damit auf dem Potential 7 des Gleichspannungszwischenkreises ZK. Ferner sind die elektrischen Anschlüsse 221, 223 der Module $M_1$, $M_3$ über einen Schalter $S_{4-2}$ bzw. $S_{4-4}$ mit einer elektrischen Leitung 131 verbunden, die auf dem zweiten Potential 8 des Gleichspannungszwischenkreises ZK liegt. Dies gilt für den in Fig. 2 dargestellten Betriebszustand, in dem die Anordnung am Wechselspannungsnetz betrieben wird und daher auch der Schalter $S_0$ an der Wechselspannungsseite des ersten Moduls $M_1$ geschlossen ist. Neben aktiven Modulen kann es bei Betrieb als DC/DC-Konverter auch passive Module geben, also Module, die nicht an dem Betrieb als DC/DC-Konverter beteiligt sind.

Wenn dagegen wie in Fig. 3 gezeigt die Anordnung in einem ersten Gleichspannungs-Betriebszustand ist, sind die elektrischen Anschlüsse 221, 223 der Module $M_1$ und $M_3$ über den Schalter $S_{42}$ bzw. $S_{44}$ mit der elektrischen Leitung 141 verbunden. Während also in dem in Fig. 2 dargestellten Betriebszustand das Schienenfahrzeug am Wechselspannungsnetz betrieben wird und somit z.B. die bereits anhand von Fig. 4 beschriebene Betriebsweise für jedes Module M in gleicher Weise gilt, werden die Module M bei dem in Fig. 3 dargestellten ersten Gleichspannungs-Betriebszustand paarweise jeweils als DC/DC-Konverter betrieben. Daher ist die Betriebsweise der Module $M_1$, $M_2$ bzw. $M_3$, $M_4$ verschieden. Der Energiefluss aus dem Gleichspannungsnetz 10 findet über die Gleichspannungsseite des Moduls $M_1$, $M_3$, d.h. über die Sekundärseite des Transformators 171, 173, zu den miteinander verbundenen Primärseiten der Transformatoren 17 statt und von diesen Primärseiten über die Transformatoren 172, 174 zu der Sekundärseite der Transformatoren 172, 174 bzw. zu der Gleichspannungsseite der Module $M_2$, $M_4$.

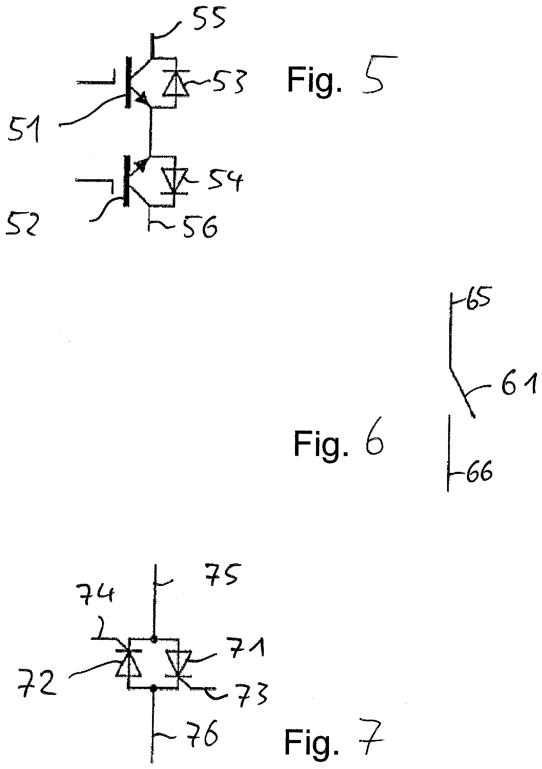

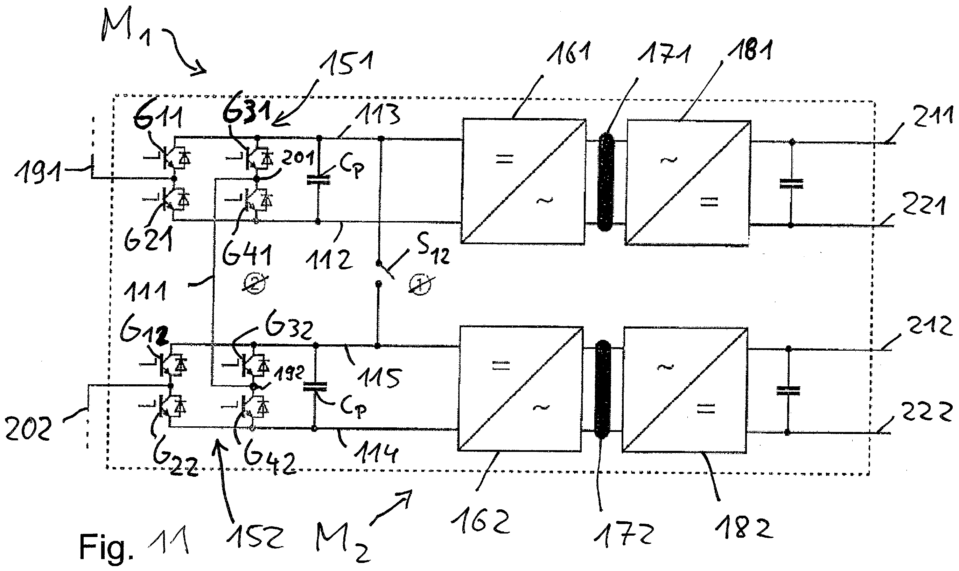

In dem Ausführungsbeispiel der Fig. 3 sind lediglich die Primärseiten innerhalb der Paare von Modulen $M_1$, $M_2$; $M_3$, $M_4$ miteinander verbunden. Hierzu sind Schalter $S_{11}$, $S_{12}$ bzw. $S_{13}$, $S_{14}$ vorhanden, die die Leitungen auf den unterschiedlichen Potentialen der Module M miteinander verbinden. Diese Verbindung wurde bereits auch als Kopplung bezeichnet. Bei der Schalteranordnung mit den Schaltern $S_{11}$, $S_{12}$, $S_{13}$, $S_{14}$ handelt es

sich jedoch lediglich um eines von mehreren möglichen Ausführungsbeispielen. Zum einen kann die Art des Schalters variieren, wie noch anhand von Fig. 5 bis Fig. 10 erläutert wird. Andererseits kann auf eine der direkten Verbindungen zwischen den Gleichspannungsleitungen der Module, die die Gleichspannungsseite des ersten Gleichrichters 15 mit der Gleichspannungsseite des Wechselrichters 16 verbinden, verzichtet werden, wie noch anhand von Fig. 11 erläutert wird. Im Wechselspannungs-Betriebszustand (Fig. 2) sind die Schalter $S_{11}$, $S_{12}$, $S_{13}$, $S_{14}$ geöffnet, so dass die Gleichspannungsleitungen der Module M nicht paarweise gekoppelt sind.

In der in Fig. 3 dargestellten Ausführungsform bildet die Verschaltung der Anschlüsse 21, 22 der Module M für jedes Modulpaar $M_1$, $M_2$; $M_3$, $M_4$ einen Spannungsteiler, da sich die Anschlüsse 221, 212 sowie 223, 214 in diesem Betriebszustand auf dem gleichen elektrischen Potential befinden und da die Gleichspannung des Gleichspannungsnetzes somit entsprechend auf die Gleichspannung im Gleichspannungszwischenkreis ZK geteilt wird. Dies setzt allerdings voraus, dass die Module in den jeweiligen Modulpaaren $M_1$, $M_2$; $M_3$, $M_4$ in gleicher Weise betrieben werden, nämlich die Transformatoren 17 mit samt der angeschlossenen Konverter 16, 18 als Serienresonanzkonverter betrieben werden, und die ersten Gleichrichter 15 nicht die Ausgangsspannung der Paare zwischen den Anschlüssen 212, 222 bzw. 214, 224 beeinflussen. Andernfalls bildet sich kein festes Spannungsverhältnis zwischen der Netzgleichspannung und der Gleichspannung im Zwischenkreis ZK, sondern hängt die Ausgangsspannung und damit die Gleichspannung des Zwischenkreises ZK von der Betriebsweise der Gleichrichter 15 ab.

Wenn die ersten Gleichrichter 19 die Ausgangsspannung des DC/DC-Konverters nicht beeinflussen, liegt daher am ersten Modul $M_1$, $M_3$ des Modulpaars die geteilte Netzgleichspannung an und wird diese Netzgleichspannung über die zweiten Gleichrichter 181, 183 in eine Wechselspannung umgerichtet. Diese umgerichtete Wechselspannung wird entsprechend dem Übersetzungsverhältnis des Transformators 171, 173 auf die Wechselspannungsseite des Wechselrichters 161 bzw. 163 übertragen und von diesem Wechselrichter in eine Gleichspannung umgewandelt. Aufgrund der direkten Kopplung mit der Gleichspannungsseite des Wechselrichters 162, 164 des zweiten Moduls $M_2$, $M_4$ des Modulpaars wird diese Gleichspannung direkt übertragen und der Wechselrichter 162 bzw. 164 erzeugt eine Wechselspannung, die wieder gemäß dem Übersetzungsverhältnis der Transformatoren 172, 174 in eine Wechselspannung auf der Sekundärseite umgewandelt wird. Daraus bilden die zweiten Gleichrichter 182, 184 die Ausgangsspannung des DC/DC-Konverters, die aufgrund des bereits beschriebenen Spannungsteils ebenfalls dem Teilungsverhältnis entspricht. Dabei ist anzumerken, dass das Teilungsverhältnis nicht zwangsläufig 1:2 ist, sondern abhängig von der Dimensionierung der elektrischen Bauteile auch anders gewählt werden kann. Allerdings ist in diesem Fall darauf zu achten, dass auch beim Betrieb am Wechselspannungsnetz die gewünschte Ausgangsspannung am Gleichspannungszwischenkreis ZK gebildet wird. Optional ist es möglich, dass bestimmte elektrische Bauteile, z.B. Kondensatoren und Spulen, ausschließlich für den ersten Gleichspannungs-Betriebszustand hinzugeschaltet werden, z. B. über nicht in Fig. 1 bis Fig. 3 dargestellte Schalter, so dass sich das gewünschte Teilungsverhältnis des genannten Spannungsteilers ergibt.

Fig. 5 zeigt eine erste Ausführungsform eines Schalters zur Kopplung der Primärseiten der Transformatoren eines Paars von Modulen, z.B. den Schalter $S_{11}$, $S_{12}$, $S_{13}$ oder $S_{14}$ gemäß Fig. 1 bis Fig. 3. Der Schalter weist eine Reihenschaltung von zwei Halbleiterschaltern, nämlich IGBTs 51, 52 auf, wobei die Durchflussrichtung der IGBTs entgegengesetzt gerichtet ist. Jeweils antiparallel zu den IGBTs 51, 52 ist eine Freilaufdiode 53, 54 geschaltet. Ist daher z.B. der IGBT 51 eingeschaltet, kann ein Strom von einem ersten Anschluss 55 des Schalters durch den eingeschalteten IGBT 51 und die Freilaufdiode 54 zu einem zweiten Anschluss 56 des Schalters fließen. Sind beide IGBTs 51, 52 eingeschaltet oder ist lediglich der IGBT 52 eingeschaltet, kann in umgekehrter Richtung vom zweiten Anschluss 56 ein Strom durch den IGBT 52 und die Freilaufdiode 53 zu dem ersten Anschluss 55 fließen. Einem solchen Schalter äquivalent ist die Kopplung, die noch anhand des Ausführungsbeispiels von Fig. 11 beschrieben wird.

Fig. 6 zeigt eine Alternative für den Schalter in Fig. 5. Dabei handelt es sich um einen Schalter 61, der in einem geschlossenen Zustand einen Kontakt einer elektrischen Leitung zwischen den Anschlüssen 65, 66 herstellt und somit eine durchgehende elektrische Leitung zwischen den Anschlüssen 65, 66 herstellt. Im geöffneten Zustand des Schalters 61 ist die elektrische Leitung zwischen den Anschlüssen 65, 66 unterbrochen.

Fig. 7 zeigt eine weitere Variante eines Schalters zur Kopplung der Primärseiten. Zwischen die Anschlüsse 75, 76 sind zwei Thyristoren 71, 72 antiparallel zueinander geschaltet. Bei entsprechender elektrischer Spannung an den Anschlüssen 75, 76 fließt daher ein Strom durch den jeweiligen Thyristor 71, 72, wenn der Thyristor über die jeweilige Gateelektrode 73, 74 eingeschaltet worden ist.

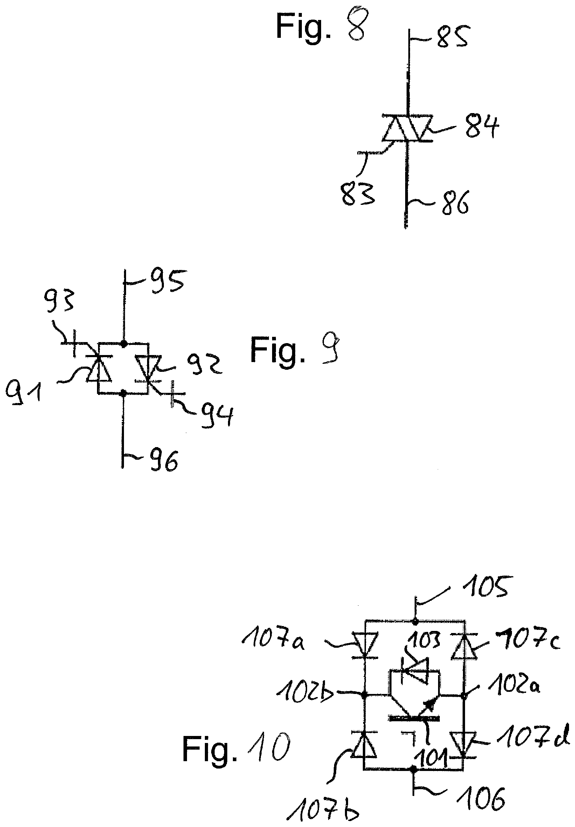

Die in Fig. 8 gezeigte weitere Variante eines Schalters zur Kopplung der Primärseiten weist einen Triac 84 auf, der die entgegensetzten Anschlüsse 85, 86 des Schalters verbindet. Bei Einschaltung des Triac 84 über die Steuerelektrode 83 wird der Triac 84 in beiden Stromflussrichtungen elektrisch leitend.

Noch eine weitere Variante eines Schalters zur Kopplung der Primärseiten ist in Fig. 9 dargestellt. Ähnlich wie in Fig. 7 sind zwei GTO-Thyristoren (Gate Turn-Off Thyristoren) antiparallel zueinander geschaltet. Über Stromimpulse an den Steuerelektroden 93, 94 können die GTO-Thyristoren 91, 92 eingeschaltet und ausgeschaltet werden. Anstelle von GTO-Thyristoren können auch IGCT (d.h. Integrated Gate-Commutated Thyristoren) eingesetzt werden.

Die in Fig. 10 gezeigte Variante eines Schalters zur Kopplung der Primärseiten kommt mit einem einzigen schaltbaren Halbleiterbauelement aus. Im dargestellten Fall handelt es sich dabei um einen IGBT 101. Es können jedoch auch andere schaltbare Halbleiterbauelemente, z.B. ein Thyristor oder GTO-Thyristor, eingesetzt werden. Antiparallel zu dem IGBT 101 ist eine Freilaufdiode 103 vorgesehen. Die entgegengesetzten Anschlüsse 102a, 102b dieser Antiparallelschaltung sind mit Kontaktpunkten jeweils einer Reihenschaltung aus zwei Dioden 107a, 107b; 107c, 107d verbunden, und zwar mit einem Kontaktpunkt zwischen den beiden Dioden 107 der Serienschaltung. Dabei sind die Dioden 107a, 107b derart in umgekehrter Durchlassrichtung geschaltet, dass ein Strom wahlweise von dem Anschluss 105 oder dem Anschluss 106 des Schalters durch die jeweilige Diode 107a bzw. 107b zu dem Anschluss 102b fließen kann. Die anderen beiden Dioden 107c, 107d sind derart bei entgegengesetzter Durchflussrichtung zueinander in Reihe geschaltet, dass ein Stromfluss von dem Anschluss 102a entweder durch die Diode 107c oder durch die Diode 107d zu dem Anschluss 105 bzw. 106 fließen kann. In eingeschaltetem Zustand des IGBT 101 kann daher je nachdem, ob das elektrische Potential an dem Anschluss 105 oder dem Anschluss 106 größer ist, ein Strom von dem Anschluss 102b zu dem Anschluss 102a fließen.

Fig. 11 zeigt ein Paar von Modulen $M_1$, $M_2$, das als DC/DC-Konverter bei Betrieb am Gleichspannungsnetz benutzt werden kann. Es handelt sich z.B. um die in Fig. 1 bis Fig. 3 dargestellten Module $M_1$, $M_2$, wobei die einzelnen Module z.B. wie in Fig. 4 gezeigt ausgestaltet sein können. Es werden daher in Fig. 11 dieselben Bezugszeichen wie in Fig. 1 bis Fig. 4 verwendet. Dabei sind in Fig. 11 nicht alle möglichen Bauteile und Verbindungen der Anordnung dargestellt.

In der Fig. 11 ist die Verbindung 111 dargestellt, welche auch bereits in Fig. 1 bis Fig. 3 dargestellt ist und den Anschluss 201 des einen Moduls $M_1$ mit dem Anschluss 192 des anderen Moduls $M_2$ verbindet. Die Verbindung 111 verbindet somit die ersten Gleichrichtern 151, 152 des Paars von Modulen M. Diese elektrische Verbindung 111 verbindet einen Anschlusspunkt zwischen den Halbleiterschaltern $G_{31}$, $G_{41}$ des ersten Gleichrichters 151 (Modul $M_1$) mit einem Anschlusspunkt zwischen den beiden Halbleiterschaltern $G_{32}$, $G_{42}$ des ersten Gleichrichters 152 des anderen Moduls $M_2$. Dadurch wird der Schalter $S_{11}$ in der Darstellung der Fig. 1 bis Fig. 3 eingespart. Beim Betrieb als DC/DC-Konverter sind die Halbleiterschalter $G_{41}$ und $G_{42}$ permanent eingeschaltet, so dass sowohl ein Strom von der weiter unten in Fig. 11 dargestellten Gleichspannungsleitung 112 auf der Primärseite des Transformators 171 (Modul $M_1$) zu der weiter unten dargestellten Gleichstromleitung 114 auf der Primärseite des Transformators 172 (Modul $M_2$) fließen kann als auch umgekehrt. In jeder der beiden möglichen Stromflussrichtungen werden jeweils einer der Halbleiterschalter und die Freilaufdiode des anderen Halbleiterschalter $G_{41}$, $G_{42}$ durchflossen. Somit ist lediglich noch zur Verbindung der anderen beiden Gleichstromleitungen 113, 115 der beiden Module $M_1$, $M_2$ ein Schalter $S_{12}$ erforderlich, der beispielsweise wie anhand von Fig. 5 bis Fig. 10 beschrieben ausgeführt sein kann.

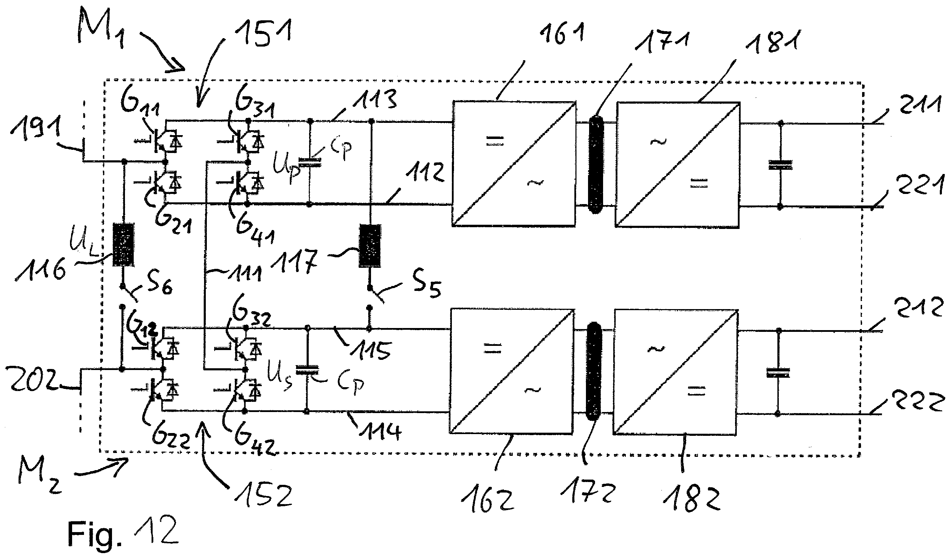

Fig. 12 zeigt ähnlich wie in Fig. 11 ein Paar von Modulen $M_1$, $M_2$. Es werden dieselben Bezugszeichen für dieselben Elemente verwendet. Im Folgenden wird lediglich auf die Unterschiede zwischen der Anordnung in Fig. 11 und der Anordnung in Fig. 12 eingegangen.

Aus Fig. 11 ist die Verbindung zwischen den Gleichstromleitungen 113, 115, die den Schalter $S_2$ aufweist, durch eine Verbindung ersetzt, die eine Induktivität 117 (z.B. zumindest eine Spule) und in Reihe dazu einen Schalter $S_5$ aufweist. Alternativ zu der elektrischen Verbindung, die die Induktivität 117 und den Schalter $S_5$ aufweist, ist zwischen den Anschlüssen 191, 202 eine elektrische Verbindung vorgesehen, die eine Induktivität 116 (z.B. wiederum mit zumindest einer Spule) und einen Schalter $S_6$ in Reihe zueinander aufweist. Es können auch beide Verbindungen, d.h. die Verbindungen mit der Induktivität 116 und mit der Induktivität 117 vorgesehen sein. In diesem Fall gibt es aber keinen Betriebszustand, in dem die Schalter $S_5$ und $S_6$ gleichzeitig eingeschaltet sind.

Ferner ist ebenfalls wie in der Anordnung gemäß Fig. 11 die Verbindung 111 vorgesehen. Allerdings dient die Anordnung in Fig. 12 anders als die Anordnung in Fig. 11 der Realisierung eines der ersten Gleichspannungs-Betriebszustände, in dem nicht nur die Wechselrichter 16, Transformatoren 17 und zweiten Gleichrichter 18 der beiden Module für den Betrieb als DC/DC-Konverter genutzt werden, sondern auch die ersten Gleichrichter 15. Für diesen Betriebszustand wird entweder der Schalter $S_5$ oder der Schalter $S_6$ eingeschaltet und werden die Halbleiterschalter G der ersten Gleichrichter 151, 152 derart wiederholt ein- und ausgeschaltet, dass die auf der Gleichspannungsseite des Wechselrichters 161 zwischen den Gleichstromleitungen 112, 113 anliegende Gleichspannung in eine entweder höhere oder niedrigere Gleichspannung zwischen den Gleichstromleitungen 114, 115 des anderen Moduls am Eingang des Wechselrichters 162 umgewandelt wird. Insbesondere werden die über die Verbindung 111 und entweder die Induktivität 116 oder 117 miteinander gekoppelten ersten Gleichrichter 151, 152 daher entweder als Tiefsetzsteller oder als Hochsetzsteller betrieben.

Gemäß einer ersten Verfahrensweise ist der Schalter $S_5$ geschlossen und der Schalter $S_6$ geöffnet. Diese Schaltzustände bleiben während des Betriebes als DC/DC-Konverter unverändert. Außerdem bleiben die Halbleiterschalter $G_{11}$, $G_{21}$, $G_{12}$ und $G_{22}$ während dieses Betriebes permanent ausgeschaltet, d.h. es nehmen an dem Betrieb lediglich die jeweiligen rechts in Fig. 12 gezeichneten Brücken der ersten Gleichrichter 151, 152 teil.

Wenn dabei die zwischen den Anschlüssen 211, 221 des ersten Moduls $M_1$ zu erzielende Gleichspannung größer als die zwischen den Anschlüssen 212, 222 des zweiten Moduls $M_2$ zu erzielende Gleichspannung sein soll, bleibt außerdem der Schalter $G_{32}$ permanent ausgeschaltet und ist der Schalter $G_{42}$ permanent eingeschaltet. Um die gewünschte Gleichspannung zwischen den Anschlüssen 212 und 222, d.h. am Gleichspannungszwischenkreis einzustellen, können in dieser Betriebsweise die Halbleiterschalter $G_{31}$ und $G_{41}$ wiederholt ein- und ausgeschaltet werden (im Folgenden wird dies auch als "Takten" bezeichnet).

Die zwischen den Leitungen 113, 112 des ersten Moduls $M_1$ über den entsprechenden Kondensator $C_P$ abfallende Spannung wird als $U_P$ bezeichnet und die über den Kondensator $C_P$ des zweiten Moduls $M_2$ zwischen den Leitungen 115, 114 bestehende Spannung wird als $U_S$ bezeichnet. Z. B. wird an die Induktivität 117 die Spannung $U_P - U_S$ angelegt (erster Zustand), indem der Schalter $G_{41}$ eingeschaltet ist und der Schalter $G_{31}$ ausgeschaltet ist. Der Schaltzustand $-U_S$ (zweiter Zustand) kann dadurch erreicht werden, dass der Schalter $G_{31}$ eingeschaltet ist und der Schalter $G_{41}$ ausgeschaltet ist. Das Verhältnis der Gleichspannungen an den Anschlüssen 211, 221 des ersten Moduls $M_1$ einerseits und zwischen den Anschlüssen 212, 222 des zweiten Moduls $M_2$ andererseits entspricht dem Verhältnis der Zeiten, in denen der erste Zustand und der zweite Zustand besteht. Über die Induktivität 117 fällt im zeitlichen Mittel die Spannung $U_L$ ab, wobei

$$U_L = (U_P - U_S) * t1 - U_S * t2$$

Dabei ist t1 die normierte Summe der Zeitintervalle, während denen der erste Zustand besteht, und ist t2 die normierte Summe der Zeitintervalle, während denen der zweite Zustand besteht. "Normiert" bedeutet, dass t1 + t2 = 1.

Wie oben erwähnt fließt ein Teil der Energie direkt von dem Gleichstromnetz in den Gleichspannungszwischenkreis und ein anderer Teil der Energie von dem Gleichstromnetz indirekt über den DC/DC-Konverter in den Gleichspannungszwischenkreis. Durch das Takten der Schalter G kann der Energiefluss zwischen den Modulen verändert werden und dadurch die Gleichspannung am Gleichspannungszwischenkreis eingestellt werden. Soll z. B. Energie ausschließlich von Modul $M_1$ zu Modul $M_2$ fließen, wird nur der Schalter $G_{31}$ getaktet, während Schalter $G_{41}$ ausgeschaltet bleibt. Wenn umgekehrt Energie ausschließlich von Modul $M_2$ zu Modul $M_1$ fließen soll, bleibt der Schalter $G_{31}$ ausgeschaltet und wird nur der Schalter $G_{41}$ getaktet.

Wenn z. B. die Spannung zwischen den Anschlüssen 212, 222 größer als die Spannung zwischen den Anschlüssen 211, 221 eingestellt werden soll, bleibt der Schalter $G_{31}$ permanent ausgeschaltet und bleibt der Schalter $G_{41}$ permanent eingeschaltet. In diesem Fall

können die Schalter $G_{32}$ und $G_{42}$ ein- und ausgeschaltet werden. Um Energie ausschließlich vom ersten Modul $M_1$ zum zweiten Modul $M_2$ fließen zu lassen, bleibt der Schalter $G_{32}$ ausgeschaltet, während nur der Schalter $G_{42}$ getaktet wird. Umgekehrt, wenn dagegen Energie nur von dem zweiten Modul $M_2$ zu dem ersten Modul $M_1$ fließen soll, bleibt der Schalter $G_{42}$ ausgeschaltet und wird nur der Schalter $G_{32}$ getaktet.

Bei einer anderen Verfahrensweise wird für den Betrieb als DC/DC-Konverter der Schalter $S_5$ permanent geöffnet (ausgeschaltet) und der Schalter $S_6$ permanent geschlossen (eingeschaltet). Ein Effekt, der bei einem Betrieb mit dieser Schalterstellung erzielt werden kann, ist eine größere resultierende Frequenz an der Induktivität 116 als die Schaltfrequenz der einzelnen Schalter.

Gemäß einer ersten Betriebsweise, die als stromprogrammierte Regelung bezeichnet werden kann (englisch: current mode control), wird z.B. durch einen ersten Regelkreis der Strom durch die Induktivität 116 bzw. Induktivität 117 geregelt. Dazu wird der Strom gemessen (durch einen in Fig. 12 nicht dargestellten Stromsensor). Wenn der Strom einen Schwellwert erreicht, wird der entsprechende Schalter ausgeschaltet. Dieser Schalter wird aber außerdem periodisch, z.B. gemäß einem externen Taktsignal, eingeschaltet. Der Schwellwert für den Strom kann z.B. in einer übergeordneten zweiten Regelschleife festgelegt werden. Insbesondere kann diese zweite Regelschleife bzw. dieser zweite Regler das Verhältnis der Spannung zwischen dem Paar von Anschlüssen 211, 221 einerseits und dem Paar von Anschlüssen 212, 222 andererseits regeln. Insbesondere können diese Spannungen an den Anschlusspaaren ebenfalls gemessen werden und als Eingangsgröße in den zweiten Regler eingegeben werden.

Auf diese Weise ist es insbesondere möglich:

- die Spannung des Gleichspannungszwischenkreises auf einen fest vorgegebenen Wert zu regeln. Damit kann die Spannung beispielsweise auf 1,8 kV geregelt werden und damit z.B. auf einen höheren Wert, als wenn bei einer Netzspannung von 3 kV die Module ohne die ersten Gleichrichter betrieben werden, d.h. die Netzspannung auf die Hälfte, in dem Ausführungsbeispiel 1,5 kV, halbiert wird. Ein Vorteil einer Regelung der Zwischenkreisspannung auf einen festen Wert besteht darin, dass der Motorwechselrichter 13 (Fig. 1 bis Fig. 3) auf geringere Spannungsschwankungen im Gleichspannungszwischenkreis ausgelegt werden kann und damit insbesondere kleiner ausgeführt werden kann.
- Durch eine Regelung kann verhindert werden, dass Ströme mit Frequenzanteilen in unerwünschten Frequenzbereichen fließen. Unerwünschte Frequenzbereiche existieren z.B., weil in diesen Frequenzbereichen Signale (d.h. Informationen) übertragen werden sollen.

Die beiden zuvor genannten Strategien können auch gleichzeitig verfolgt werden, d.h. es kann gleichzeitig eine Regelung der Spannung des Gleichspannungszwischenkreises auf einen fest vorgegebenen Wert stattfinden und es können Ströme mit unerwünschten Frequenzanteilen vermieden werden.

Gemäß einem konkreten Ausführungsbeispiel werden zum einfacheren Verständnis zunächst Schaltzustände definieret. Für das erste Modul $M_1$ wird die Schaltzustandsvariable p1 definiert und auch eine zweite Schaltzustandsvariable p2 definiert. Die Schaltzustandsvariable p1 kann die Zustände 0 und 1 annehmen und betrifft die Schalter $G_{11}$ und $G_{21}$. Im Schaltzustand p1 = 1 ist der Schalter $G_{11}$ eingeschaltet und der Schalter $G_{21}$ ausgeschaltet. Auch die Schaltzustandsvariable p2 kann die Schaltzustände 0 und 1 annehmen. Im Schaltzustand p2 = 1 ist der Schalter $G_{31}$ eingeschaltet und der Schalter $G_{41}$ ausgeschaltet. Im Schaltzustand p2 = 0 ist der Schalter $G_{31}$ ausgeschaltet und der Schalter $G_{41}$ eingeschaltet. Entsprechende Schaltzustandsvariablen s1 und s2 werden ferner für das Modul $M_2$ definiert. Im Schaltzustand s1 = 1 ist der Schalter $G_{12}$ eingeschaltet und der Schalter $G_{22}$ ausgeschaltet. Im Schaltzustand s1 = 0 ist der Schalter $G_{12}$ ausgeschaltet und der Schalter $G_{22}$ eingeschaltet. Im Schaltzustand s2 = 1 ist der Schalter $G_{32}$ eingeschaltet und der Schalter $G_{42}$ ausgeschaltet. Im Schaltzustand s2 = 0 ist der Schalter $G_{32}$ ausgeschaltet und der Schalter $G_{42}$ eingeschaltet.

Ferner wird der in Fig. 12 weiter oben liegende Anschluss der Induktivität 116 als positiver Anschluss definiert und der weiter unten in Fig. 12 liegende Anschluss der Induktivität 116 als negativer Anschluss definiert. Ein Strom, der durch die Induktivität 116 von dem positiven Anschluss zu dem negativen Anschluss fließt (d.h. von Anschluss 191 zu Anschluss 202) wird daher als positiver Strom aufgefasst.

Die über die Induktivität 116 abfallende Spannung $U_L$ ergibt sich dann aus folgender Gleichung:

$$U_L = U_P * (p1 - p2) + U_S * (s2 - s1).$$

Auf Basis dieser Definitionen lassen sich nun verschiedene Betriebszustände definieren. Es kann durch Umschalten der Schalter G zwischen den Zuständen umgeschaltet werden, in dem (erster Zustand) die Spannung $U_L$ gleich der Differenz der Spannungen $U_P$ - $U_S$ ist und in dem (zweiter Zustand) die Spannung $U_L$ gleich der negativen Spannung -$U_S$ ist. Diese Betriebsweise, in der zwischen diesen beiden genannten Zuständen umgeschaltet wird, entspricht der Betriebsweise eines an sich bekannten Buck-Konverters.

Die beiden genannten Spannungszustände der Induktivität 116 können über verschiedene Gesamtschaltzustände der Schalter G erzielt werden. Ferner können auch entsprechende Betriebszustände erzielt werden, wenn nicht der Schalter $S_6$, sondern stattdessen der Schalter $S_5$ geschlossen ist und daher die Induktivität 117 statt der Induktivität 116 genutzt wird.

Wenn der Schalter $S_6$ eingeschaltet ist und daher die Induktivität 116 genutzt wird, kann der Spannungszustand $U_P$ - $U_S$ durch die oben definierten Schaltzustände der Zustandsvariablen p1 = 1 und p2 = 0 und s1 = 1 und s2 = 0 erreicht werden. Der Schaltzustand -$U_S$ kann erreicht werden durch p1 = 0 und p2 = 0 und s1 = 1 und s2 = 0. Der Schaltzustand -$U_S$ kann außerdem durch den folgenden Gesamt-Schalterzustand erreicht werden: p1 = 1 und p2 = 1 und s1 = 1 und s2 = 0.

Es kann z.B. außerdem noch der Zustand erzielt werden, in dem die über die Induktivität abfallende Spannung $U_L$ gleich der Spannung $U_P$ zwischen den Leitungen 113 und 112 ist.

Die Schaltfrequenz der einzelnen Schalter kann gegenüber der Frequenz der Umschaltung der Spannungszustände zwischen $U_P$ - $U_S$ einerseits und -$U_S$ andererseits wie folgt beispielsweise reduziert werden. In dem Ausführungsbeispiel werden nacheinander die in der folgenden Aufzählung von 1. bis 4. gelisteten Zustände geschaltet. Nach dem Zustand 4 wird wieder der Zustand 1 geschaltet. Die Zustände sind:

1. p1 = 1, p2 = 0, s1 = 1, s2 = 0 (Zustand $U_L = U_P - U_S$)
2. p1 = 0, p2 = 0, s1 = 1, s2 = 0 (Zustand $U_L = -U_S$)
3. p1 = 1, p2 = 0, s1 = 1, s2 = 0 (Zustand $U_L = U_P - U_S$)
4. p1 = 1, p2 = 1, s1 = 1, s2 = 0 (Zustand $U_L = -U_S$)

Damit werden in dem gesamten Zyklus der Gesamt-Schaltzustände p1 und p2 nur jeweils einmal in den anderen Zustand und wieder zurückgeschaltet. Dabei ist der Strom durch die Induktivität positiv, d.h. fließt vom ersten zum zweiten Modul. Der Strom kann aber auch negativ sein, z. B. in folgender alternativer Schaltfolge:

1. p1 = 0, p2 = 1, s1 = 0, s2 = 1 (Zustand $U_L = -U_P + U_S$)
2. p1 = 1, p2 = 1, s1 = 0, s2 = 1 (Zustand $U_L = U_S$)
3. p1 = 0, p2 = 1, s1 = 0, s2 = 1 (Zustand $U_L = -U_P + U_S$)
4. p1 = 0, p2 = 0, s1 = 0, s2 = 1 (Zustand $U_L = U_S$)

Damit ergibt sich die gleiche Energieflussrichtung wie bei der zuerst genannten Schaltfolge, da sowohl der Strom als auch die Spannung negativ ist..

**Patentansprüche**

1. Elektrische Energieversorgungsanordnung für Antriebseinrichtungen, zum Betreiben eines Schienenfahrzeugs an elektrischen Versorgungsnetzen, wobei die Energieversorgungsanordnung aufweist:

• zumindest einen elektrischen Netzanschluss (A) zum Anschließen der Anordnung an ein elektrisches Energieversorgungsnetz,
• einen motorseitigen elektrischen Anschluss (21, 22) zum Anschließen der Anordnung an einen Gleichspannungszwischenkreis (ZK), an den wiederum zumindest ein Traktionswechselrichter (13) zum Betreiben zumindest eines Fahrmotors (12) anschließbar ist,
• eine Gleichrichteranordnung (M₁, M₂, M₃, M₄) zum Betrieb des Schienenfahrzeugs an einem Wechselspannungsnetz, wobei die Gleichrichteranordnung (M₁, M₂, M₃, M₄) über einen ersten Filter (2) mit dem elektrischen Netzanschluss (A) oder mit einem der elektrischen Netzanschlüsse verbunden ist und eine Mehrzahl von Modulen (M) aufweist, in denen jeweils ein erster Gleichrichter (15) über einen Wechselrichter (16), der an die Primärseite eines Transformators (17) angeschlossen ist, und den Transformator (17) mit einem zweiten Gleichrichter (18) verbunden ist, wobei die Sekundärseite des Transformators (17) mit dem zweiten Gleichrichter (18) verbunden ist und der erste Gleichrichter (15) an seiner Wechselspannungsseite über den ersten Filter (2) mit dem elektrischen Netzanschluss (A) oder mit dem einen der elektrischen Netzanschlüsse verbunden ist, wobei der zweite Gleichrichter (18) an seiner Gleichspannungsseite mit dem motorseitigen elektrischen Anschluss (21, 22) verbunden ist und wobei die Wechselspannungsanschlüsse (19, 20) der ersten Gleichrichter (15) in Serie geschaltet sind, wobei - bei Betrieb des Schienenfahrzeugs an einem Wechselspannungsnetz - die Gleichspannungsanschlüsse (211, 212; 221, 222) der zweiten Gleichrichter (181, 182) parallel geschaltet sind,
• eine elektrische Anschlussverbindung (5) zum Betrieb des Schienenfahrzeugs an einem Gleichspannungsnetz, wobei die elektrische Anschlussverbindung (5) einen zweiten Filter (3) aufweist,

wobei - zumindest in einem ersten Gleichspannungs-Betriebszustand - bei Betrieb des Schienenfahrzeugs an einem Gleichspannungsnetz,

- die elektrische Anschlussverbindung (5) den elektrischen Netzanschluss (A) oder einen zweiten der elektrischen Netzanschlüsse mit der Gleichspannungsseite des zweiten Gleichrichters (181) eines ersten (M₁) der Module (M) verbindet,
- die Primärseite des Transformators (171) des ersten Moduls (M₁) mit der Primärseite des Transformators (172) eines zweiten (M₂) der Module (M) verbunden ist, und zwar indirekt über die Wechselrichter (161, 162) des ersten Moduls (M₁) und des zweiten Moduls (M₂),
- die Gleichspannungsseite des zweiten Gleichrichters (182) des zweiten Moduls (M₂) mit dem motorseitigen elektrischen Anschluss (21, 22) zum Anschließen der Anordnung an den Gleichspannungszwischenkreis (ZK) verbunden ist,
- sodass Energie zum Betreiben des zumindest einen Fahrmotors (12) aus dem elektrischen Energieversorgungsnetz über den zweiten Gleichrichter (181) des ersten Moduls (M₁), die Sekundärseite des Transformators (171) des ersten Moduls (M₁), die Primärseite des Transformators (171) des ersten Moduls (M₁), den Wechselrichter (161) des ersten Moduls (M₁), den Wechselrichter (162) des zweiten Moduls (M₂), die Primärseite des Transformators (172) des zweiten Moduls (M₂), die Sekundärseite des Transformators (172) des zweiten Moduls (M₂) und den zweiten Gleichrichter (182) des zweiten Moduls (M₂) in den Gleichspannungszwischenkreis (ZK) übertragen wird.

2. Energieversorgungsanordnung nach dem vorhergehenden Anspruch, wobei zur Verbindung der Primärseiten der Transformatoren (171, 172) des ersten (M₁) und zweiten (M₂) Moduls die Gleichspannungsseite des Wechselrichters (161) des ersten Moduls (M₁) mit der Gleichspannungsseite des Wechselrichters (162) eines zweiten (M₂) der Module (M) verbunden ist, und zwar direkt über zumindest eine elektrische Kopplungsverbindung zur Kopplung der Gleichspannungsseiten der Wechselrichter (161, 162) und/oder indirekt über den ersten Gleichrichter (151) des ersten Moduls (M₁) und über den ersten Gleichrichter (152) des zweiten Moduls (M₂).

3. Energieversorgungsanordnung nach einem der vorhergehenden Ansprüche, wobei bei Betrieb des Schienenfahrzeugs in dem zumindest einen ersten Gleichspannungs-Betriebszustand die Gleichspannungsseite des zweiten Gleichrichters (181) des ersten Moduls (M1) außer mit der elektrischen Anschlussverbindung (5) auch mit einem von zwei Potenzialen des motorseitigen elektrischen Anschlusses (21, 22) zum Anschließen der Anordnung an den Gleichspannungszwischenkreis (ZK) verbunden ist.

4. Energieversorgungsanordnung nach einem der vorhergehenden Ansprüche, wobei die Anordnung eine elektrische Leitungsverbindung (4) und eine elektrische Schalteranordnung aufweist, wobei

- bei Betrieb des Schienenfahrzeugs in dem zumindest einen ersten Gleichspannungs-Betriebszustand in einer ersten Schalterstellung der elektrischen Schalteranordnung der Gleichspannungszwischenkreis (ZK) indirekt, d.h. lediglich über zumindest einen der zweiten Gleichrichter (181, 182), mit dem motorseitigen elektrischen Anschluss (21, 22) verbunden ist, sodass Energie zum Betreiben des zumindest einen Fahrmotors (12) aus dem elektrischen Energieversorgungsnetz über den zweiten Gleichrichter (181) des ersten Moduls ($M_1$), den Wechselrichter (161) des ersten Moduls ($M_1$), den Wechselrichter (162) des zweiten Moduls ($M_2$) und den zweiten Gleichrichter (182) des zweiten Moduls ($M_2$) in den Gleichspannungszwischenkreis (ZK) übertragen wird,

- bei Betrieb des Schienenfahrzeugs in einem zweiten Gleichspannungs-Betriebszustand in einer zweiten Schalterstellung der elektrischen Schalteranordnung der Gleichspannungszwischenkreis (ZK) über die elektrische Leitungsverbindung (4) direkt, d.h. nicht lediglich über zumindest einen der zweiten Gleichrichter (181, 182), mit dem elektrischen Netzanschluss (A) oder einem der elektrischen Netzanschlüsse verbunden ist, sodass Energie zum Betreiben des zumindest einen Fahrmotors (12) aus dem elektrischen Energieversorgungsnetz direkt über die elektrische Leitungsverbindung in den Gleichspannungszwischenkreis (ZK) übertragen wird.

5. Energieversorgungsanordnung nach einem der vorhergehenden Ansprüche, wobei - in einem vorgegebenen ersten Gleichspannungs-Betriebszustand - eine der elektrischen Kopplungsverbindungen die Gleichspannungsseite des Wechselrichters (161) des ersten Moduls ($M_1$) indirekt über einen Halbleiterschalter des ersten Gleichrichters (151) des ersten Moduls ($M_1$) und über einen Halbleiterschalter des ersten Gleichrichters (152) des zweiten Moduls ($M_2$) mit der Gleichspannungsseite des Wechselrichters (162) des zweiten Moduls ($M_2$) verbindet und wobei der Halbleiterschalter des ersten Gleichrichters (151) des ersten Moduls ($M_1$) und der Halbleiterschalter des ersten Gleichrichters (152) des zweiten Moduls ($M_2$) während des vorgegebenen ersten Gleichspannungs-Betriebszustandes permanent eingeschaltet sind.

6. Energieversorgungsanordnung nach einem der vorhergehenden Ansprüche, die eine Steuereinrichtung zum Steuern des Betriebes der ersten Gleichrichter (151, 152) des ersten und zweiten Moduls ($M_1$, $M_2$) aufweist, während das Schienenfahrzeug in dem zumindest einen ersten Gleichspannungs-Betriebszustand betrieben wird, wobei die Steuereinrichtung ausgestaltet ist, durch Steuern von Schaltzeitpunkten von Halbleiterschaltern (G) zumindest eines der ersten Gleichrichter (151, 152) an der Gleichspannungsseite des Wechselrichters (162) des zweiten Moduls ($M_2$) eine unter Berücksichtigung der Gleichspannung des elektrischen Energieversorgungsnetzes und einer gewünschten Gleichspannung in dem Gleichspannungszwischenkreis (ZK) vorgegebene Gleichspannung zu erzeugen, sodass die gewünschte Gleichspannung in dem Gleichspannungszwischenkreis (ZK) erzielt wird.

7. Verfahren zum Betreiben eines Schienenfahrzeugs mittels einer elektrischen Energieversorgungsanordnung an elektrischen Versorgungsnetzen, wobei:

• die Energieversorgungsanordnung über zumindest einen elektrischen Netzanschluss (A) an ein elektrisches Energieversorgungsnetz angeschlossen wird,
• die Energieversorgungsanordnung über einen motorseitigen elektrischen Anschluss (21, 22) an einen Gleichspannungszwischenkreis (ZK) angeschlossen wird, an den wiederum zumindest ein Traktionswechselrichter (13) zum Betreiben zumindest eines Fahrmotors (12) angeschlossen ist oder wird,
• eine Gleichrichteranordnung ($M_1$, $M_2$, $M_3$, $M_4$) der Energieversorgungsanordnung zum Betrieb des Schienenfahrzeugs an einem Wechselspannungsnetz über einen ersten Filter (2) mit dem elektrischen Netzanschluss (A) oder mit einem der elektrischen Netzanschlüsse verbunden wird, wobei die Gleichrichteranordnung ($M_1$, $M_2$, $M_3$, $M_4$) eine Mehrzahl von Modulen (M) aufweist, in denen jeweils ein erster Gleichrichter (15) über einen Wechselrichter (16), der an die Primärseite eines Transformators (17) angeschlossen ist, und den Transformator (17) mit einem zweiten Gleichrichter (18) verbunden ist, wobei die Sekundärseite des Transformators (17) mit dem zweiten Gleichrichter (18) verbunden ist und der erste Gleichrichter (15) an seiner Wechselspannungsseite über den ersten Filter (2) mit dem elektrischen Netzanschluss (A) oder mit dem einen der elektrischen Netzanschlüsse verbunden wird, wobei der zweite Gleichrichter (18) an seiner Gleichspannungsseite mit dem motorseitigen elektrischen Anschluss (21, 22) verbunden wird und wobei die Wechselspannungsanschlüsse (19, 20) der ersten Gleichrichter (15) in Serie geschaltet werden oder sind, wobei - zum Betrieb des Schienenfahrzeugs an einem Wechselspannungsnetz - die Gleichspannungsanschlüsse (211, 212; 221, 222) der zweiten Gleichrichter (181, 182) parallel geschaltet werden,
•

- zumindest in einem ersten Gleichspannungs-Betriebszustand - zum Betrieb des Schienenfahrzeugs an einem Gleichspannungsnetz,
- der elektrische Netzanschluss (A) oder ein zweiter der elektrischen Netzanschlüsse über einen zweiten Filter (3) mit dem elektrischen Versorgungsnetz verbunden wird,
- der elektrische Netzanschluss (A) oder der zweite der elektrischen Netzanschlüsse mit der Gleichspannungsseite des zweiten Gleichrichters (181) eines ersten (M₁) der Module (M) verbunden wird,

- die Primärseite des Transformators (171) des ersten Moduls (M₁) mit der Primärseite des Transformators (172) eines zweiten (M₂) der Module (M) verbunden wird, und zwar indirekt über die Wechselrichter (161, 162) des ersten Moduls (M₁) und des zweiten Moduls (M₂),
- die Gleichspannungsseite des zweiten Gleichrichters (182) des zweiten Moduls (M₂) mit dem motorseitigen elektrischen Anschluss (21, 22) zum Anschließen der Anordnung an den Gleichspannungszwischenkreis (ZK) verbunden wird,

sodass beim Betrieb des Schienenfahrzeugs an einem Gleichspannungsnetz in dem zumindest einen ersten Gleichspannungs-Betriebszustand Energie zum Betreiben des zumindest einen Fahrmotors (12) aus dem elektrischen Energieversorgungsnetz über den zweiten Gleichrichter (181) des ersten Moduls (M1), die Sekundärseite des Transformators (171) des ersten Moduls (M₁), die Primärseite des Transformators (171) des ersten Moduls (M₁), den Wechselrichter (161) des ersten Moduls (M₁), den Wechselrichter (162) des zweiten Moduls (M₂), die Primärseite des Transformators (172) des zweiten Moduls (M₂), die Sekundärseite des Transformators (172) des zweiten Moduls (M₂) und den zweiten Gleichrichter (182) des zweiten Moduls (M2) in den Gleichspannungszwischenkreis (ZK) übertragen wird.

8. Verfahren nach dem vorhergehenden Anspruch, wobei zum Betrieb des Schienenfahrzeugs in dem zumindest einen ersten Gleichspannungs-Betriebszustand die Gleichspannungsseite des zweiten Gleichrichters (181) des ersten Moduls (M1) außer mit dem elektrischen Netzanschluss (A) oder mit dem zweiten der elektrischen Netzanschlüsse auch mit einem von zwei Potenzialen des motorseitigen elektrischen Anschlusses (21, 22) zum Anschließen der Anordnung an den Gleichspannungszwischenkreis (ZK) verbunden wird.

9. Verfahren nach Anspruch 7 oder 8, wobei

- zum Betrieb des Schienenfahrzeugs in dem zumindest einen ersten Gleichspannungs-Betriebszustand eine erste Schalterstellung einer elektrischen Schalteranordnung eingestellt wird, in der der Gleichspannungszwischenkreis (ZK) indirekt, d.h. lediglich über zumindest einen der zweiten Gleichrichter (181, 182), mit dem motorseitigen elektrischen Anschluss (21, 22) verbunden ist, sodass beim Betrieb des Schienenfahrzeugs in dem zumindest einen ersten Gleichspannungs-Betriebszustand Energie zum Betreiben des zumindest einen Fahrmotors (12) aus dem elektrischen Energieversorgungsnetz über den zweiten Gleichrichter (181) des ersten Moduls (M₁), den Wechselrichter (161) des ersten Moduls (M₁), den Wechselrichter (162) des zweiten Moduls (M₂) und den zweiten Gleichrichter (182) des zweiten Moduls (M₂) in den Gleichspannungszwischenkreis (ZK) übertragen wird,

- zum Betrieb des Schienenfahrzeugs in einem zweiten Gleichspannungs-Betriebszustand eine zweite Schalterstellung der elektrischen Schalteranordnung eingestellt wird, in der der Gleichspannungszwischenkreis (ZK) über eine elektrische Leitungsverbindung direkt, d.h. nicht lediglich über zumindest einen der zweiten Gleichrichter (181, 182), mit dem elektrischen Netzanschluss (A) oder einem der elektrischen Netzanschlüsse verbunden ist, sodass beim Betrieb des Schienenfahrzeugs in dem zweiten Gleichspannungs-Betriebszustand Energie zum Betreiben des zumindest einen Fahrmotors (12) aus dem elektrischen Energieversorgungsnetz direkt über die elektrische Leitungsverbindung in den Gleichspannungszwischenkreis (ZK) übertragen wird.

10. Verfahren nach einem der Ansprüche 7 bis 9, wobei
- zum Betrieb des Schienenfahrzeugs in einem vorgegebenen ersten Gleichspannungs-Betriebszustand - eine der elektrischen Kopplungsverbindungen hergestellt wird, indem die Gleichspannungsseite des Wechselrichters (161) des ersten Moduls (M₁) indirekt über einen Halbleiterschalter des ersten Gleichrichters (151) des ersten Moduls (M₁) und über einen Halbleiterschalter des ersten Gleichrichters (152) des zweiten Moduls (M₂) mit der Gleichspannungsseite des Wechselrichters (162) des zweiten Moduls (M₂) verbunden wird, und wobei der Halbleiterschalter des ersten Gleichrichters (151) des ersten Moduls (M₁) und der Halbleiterschalter des ersten Gleichrichters (152) des zweiten Moduls (M₂) während des vorgegebenen ersten Gleichspannungs-Betriebszustandes permanent eingeschaltet bleiben.

11. Verfahren zum Herstellen einer elektrischen Energieversorgungsanordnung für Antriebseinrichtungen, zum Betreiben eines Schienenfahrzeugs an elektrischen Versorgungsnetzen, aufweisend:

• Bereitstellen zumindest eines elektrischen Netzanschlusses (10) zum Anschließen der Anordnung an ein elektrisches Energieversorgungsnetz,
• Bereitstellen eines motorseitigen elektrischen Anschluss (21, 22) zum Anschließen der Anordnung an einen Gleichspannungszwischenkreis (ZK), an den wiederum zumindest ein Traktionswechselrichter (13) zum Betreiben zumindest eines Fahrmotors (12) anschließbar ist,

• Bereitstellen einer Gleichrichteranordnung $(M_1, M_2, M_3, M_4)$ zum Betrieb des Schienenfahrzeugs an einem Wechselspannungsnetz und Verbinden der Gleichrichteranordnung $(M_1, M_2, M_3, M_4)$ über einen ersten Filter (2) mit dem elektrischen Netzanschluss (A) oder mit einem der elektrischen Netzanschlüsse, wobei die Gleichrichteranordnung $(M_1, M_2, M_3, M_4)$ eine Mehrzahl von Modulen (M) aufweist, in denen jeweils ein erster Gleichrichter (15) über einen Wechselrichter (16), der an die Primärseite eines Transformators (17) angeschlossen ist, und den Transformator (17) mit einem zweiten Gleichrichter (18) verbunden ist, wobei die Sekundärseite des Transformators (17) mit dem zweiten Gleichrichter (18) verbunden ist und der erste Gleichrichter (15) an seiner Wechselspannungsseite über den ersten Filter (2) mit dem elektrischen Netzanschluss (A) oder mit dem einen der elektrischen Netzanschlüsse verbunden wird, wobei der zweite Gleichrichter (18) an seiner Gleichspannungsseite mit dem motorseitigen elektrischen Anschluss (21, 22) verbunden wird und wobei die Wechselspannungsanschlüsse (19, 20) der ersten Gleichrichter (15) in Serie geschaltet werden, wobei eine Steuerung und eine von der Steuerung gesteuerte Schalteranordnung vorgesehen werden, die - bei Betrieb des Schienenfahrzeugs an einem Wechselspannungsnetz - die Gleichspannungsanschlüsse (211, 212; 221, 222) der zweiten Gleichrichter (181, 182) parallel schalten,

• Bereitstellen einer elektrischen Anschlussverbindung (5) zum Betrieb des Schienenfahrzeugs an einem Gleichspannungsnetz, wobei die elektrische Anschlussverbindung (5) einen zweiten Filter (3) aufweist,

wobei die Steuerung und die Schalteranordnung ausgestaltet werden - zumindest in einem ersten Gleichspannungs-Betriebszustand - bei Betrieb des Schienenfahrzeugs an einem Gleichspannungsnetz,

- den elektrischen Netzanschluss (A) oder einen zweiten der elektrischen Netzanschlüsse über die elektrische Anschlussverbindung (5) mit der Gleichspannungsseite des zweiten Gleichrichters (181) eines ersten $(M_1)$ der Module (M) zu verbinden,
- die Primärseite des Transformators (171) des ersten Moduls $(M_1)$ mit der Primärseite des Transformators (172) eines zweiten $(M_2)$ der Module (M) zu verbinden, und zwar indirekt über die Wechselrichter (161, 162) des ersten Moduls $(M_1)$ und des zweiten Moduls $(M_2)$,
- die Gleichspannungsseite des zweiten Gleichrichters (182) des zweiten Moduls $(M_2)$ mit dem motorseitigen elektrischen Anschluss (21, 22) zum Anschließen der Anordnung an den Gleichspannungszwischenkreis (ZK) zu verbinden,
- sodass Energie zum Betreiben des zumindest einen Fahrmotors (12) aus dem elektrischen Energieversorgungsnetz über den zweiten Gleichrichter (181) des ersten Moduls $(M_1)$, die Sekundärseite des Transformators (171) des ersten Moduls $(M_1)$, die Primärseite des Transformators (171) des ersten Moduls $(M_1)$, den Wechselrichter (161) des ersten Moduls $(M_1)$, den Wechselrichter (162) des zweiten Moduls $(M_2)$, die Primärseite des Transformators (172) des zweiten Moduls $(M_2)$, die Sekundärseite des Transformators (172) des zweiten Moduls $(M_2)$ und den zweiten Gleichrichter (182) des zweiten Moduls $(M_2)$ in den Gleichspannungszwischenkreis (ZK) übertragen wird.

## Claims

1. An electrical power supply arrangement for drive devices, for operating a rail vehicle on electrical power supply networks, the power supply arrangement comprising:

   • at least one electrical network terminal (A) for connecting the arrangement to an electrical power supply network;
   • a motor-side electrical terminal (21, 22) for connecting the arrangement to a DC voltage intermediate circuit (ZK), to which, in turn, at least one traction inverter (13) for operating at least one driving motor (12) can be connected;
   • a rectifier arrangement $(M_1, M_2, M_3, M_4)$ for operating the rail vehicle on an AC voltage network, wherein the rectifier arrangement $(M_1, M_2, M_3, M_4)$ is connected via a first filter (2) to the electrical network terminal (A) or to one of the electrical network terminals and comprises a plurality of modules (M), in each of which a first rectifier (15) is connected via an inverter (16), which is connected to the primary side of a transformer (17), and the transformer (17) to a second rectifier (18), wherein the secondary side of the transformer (17) is connected to the second rectifier (18), and the first rectifier (15) on the AC voltage side thereof is connected via the first filter (2) to the electrical network terminal (A) or to one of the electrical network terminals, wherein the second rectifier (18) on the DC voltage side thereof is connected to the motor-side electrical terminal (21, 22), and wherein the AC voltage terminals (19, 20) of the first rectifiers (15) are connected in series, wherein - during operation of the rail vehicle on an AC voltage network - the DC voltage terminals (211, 212; 221, 222) of the second rectifiers (181, 182) are connected in parallel;

• an electrical terminal connection (5) for operating the rail vehicle on a DC voltage network, wherein the electrical terminal connection (5) comprises a second filter (3),

wherein - at least in a first DC voltage operating state - during operation of the rail vehicle on a DC voltage network

- the electrical terminal connection (5) connects the electrical network terminal (A) or a second of the electrical network terminals to the DC voltage side of the second rectifier (181) of a first (M$_1$) of the modules (M);
- the primary side of the transformer (171) of the first module (M$_1$) is connected to the primary side of the transformer (172) of a second (M$_2$) of the modules (M), and namely indirectly via the inverters (161, 162) of the first module (M$_1$) and of the second module (M$_2$);
- the DC voltage side of the second rectifier (182) of the second module (M$_2$) is connected to the motor-side electrical terminal (21, 22) for connecting the arrangement to the DC voltage intermediate circuit (ZK),
- so that energy for operating the at least one driving motor (12) is transmitted from the electrical power supply network via the second rectifier (181) of the first module (M$_1$), the secondary side of the transformer (171) of the first module (M$_1$), the primary side of the transformer (171) of the first module (M$_1$), the inverter (161) of the first module (M$_1$), the inverter (162) of the second module (M$_2$), the primary side of the transformer (172) of the second module (M$_2$), the secondary side of the transformer (172) of the second module (M$_2$), and the second rectifier (182) of the second module (M$_2$) to the DC voltage intermediate circuit (ZK).

2. The power supply arrangement according to the preceding claim, wherein the DC voltage side of the inverter (161) of the first module (M$_1$) is connected to the DC voltage side of the inverter (162) of a second (M$_2$) of the modules (M) for connecting the primary sides of the transformers (171, 172) of the first (M$_1$) and second (M$_2$) modules, and namely directly via at least one electrical coupling connection for coupling the DC voltage sides of the inverters (161, 162) and/or indirectly via the first rectifier (151) of the first module (M$_1$) and via the first rectifier (152) of the

second module (M$_2$).

3. The power supply arrangement according to any one of the preceding claims, wherein, during operation of the rail vehicle in the at least one first DC voltage operating state, the DC voltage side of the second rectifier (181) of the first module (M$_1$), in addition to the electrical terminal connection (5), is also connected to one of two potentials of the motor-side electrical terminal (21, 22) for connecting the arrangement to the DC voltage intermediate circuit (ZK).

4. The power supply arrangement according to any one of the preceding claims, the arrangement comprising an electrical line connection (4) and an electrical switch arrangement, wherein

- during operation of the rail vehicle in the at least one first DC voltage operating state, the DC voltage intermediate circuit (ZK) in a first switch position of the electrical switch arrangement is connected indirectly, that is, only via at least one of the two rectifiers (181, 182), to the motor-side electrical terminal (21, 22) so that energy for operating the at least one driving motor (12) is transmitted from the electrical power supply network via the second rectifier (181) of the first module (M$_1$), the inverter (161) of the first module (M$_1$), the inverter (162) of the second module (M$_2$), and the second rectifier (182) of the second module (M$_2$) to the DC voltage intermediate circuit (ZK);
- during operation of the rail vehicle in a second DC voltage operating state, the DC voltage intermediate circuit (ZK) in a second switch position of the electrical switch arrangement is connected via the electrical line connection (4) directly, that is, not only via at least one of the two rectifiers (181, 182), to the electrical network terminal (A) or one of the electrical network terminals, so that energy for operating the at least one driving motor (12) is transmitted from the electrical power supply network directly via the electrical line connection to the DC voltage intermediate circuit (ZK).

5. The power supply arrangement according to any one of the preceding claims, wherein - in a predefined first DC voltage operating state - one of the electrical coupling connections indirectly connects the DC voltage side of the inverter (161) of the first module (M$_1$) indirectly via a semiconductor switch of the first rectifier (151) of the first module (M$_1$) and via a semiconductor switch of the first rectifier (152) of the second module (M$_2$) to the DC voltage side of the inverter (162) of the second module (M$_2$), the semiconductor switch of the first rectifier (151) of the first module (M$_1$) and the semiconductor switch of the first rectifier (152) of the second module (M$_2$) being permanently switched on during the predefined first DC voltage operating state.

6. The power supply arrangement according to any one of the preceding claims, comprising a control unit for controlling the operation of the first rectifier (151, 152) of the first and second modules (M$_1$, M$_2$) while the rail vehicle is operated in the at least one first DC voltage operating state, wherein the control unit is designed, by controlling switching times of semiconductor switches (G) of at least one of the first rectifiers (151, 152) on the DC voltage side of the inverter (162) of the second module (M$_2$), to generate a predefined DC voltage, taking the DC voltage of the electrical power supply network and a desired DC voltage in the DC voltage intermediate circuit (ZK) into consideration, so that the desired DC voltage is achieved in the DC voltage intermediate circuit (ZK).

7. A method for operating a rail vehicle by means of an electrical power supply arrangement on electrical supply networks, wherein:

   • the power supply arrangement is connected via at least one electrical network terminal (A) to an electrical power supply network;
   • the power supply arrangement is connected via a motor-side electrical terminal (21, 22) to a DC voltage intermediate circuit (ZK) to which, in turn, at least one traction inverter (13) for operating at least one driving motor (12) is connected;
   • a rectifier arrangement (M$_1$, M$_2$, M$_3$, M$_4$) of the power supply arrangement for operating the rail vehicle on an AC voltage network is connected via a first filter (2) to the electrical network terminal (A) or to one of the electrical network terminals, the rectifier arrangement (M$_1$, M$_2$, M$_3$, M$_4$) comprising a plurality of modules (M), in each of which a first rectifier (15) is connected via an inverter (16), which is connected to the primary side of a transformer (17), and the transformer (17) to a second rectifier (18), the secondary side of the transformer (17) being connected to the second rectifier (18), and the first rectifier (15) on the AC voltage side thereof is connected via the first filter (2) to the electrical network terminal (A) or to one of the electrical network terminals, the second rectifier (18) on the DC voltage side thereof being connected to the motor-side electrical terminal (21, 22), and the AC voltage terminals (19, 20) of the first rectifiers (15) being connected in series, - for operating the rail vehicle on an AC voltage network
   - the DC voltage terminals (211, 212; 221, 222) of the second rectifiers (181, 182) being connected in parallel;

•

   - at least in a first DC voltage operating state
   - for operating the rail vehicle on a DC voltage network,
   - the electrical network terminal (A) or a second of the electrical network terminals is connected via a second filter (3) to the electrical supply network;
   - the electrical network terminal (A) or the second of the electrical network terminals is connected to the DC voltage side of the second rectifier (181) of a first (M$_1$) of the modules (M);
   - the primary side of the transformer (171) of the first module (M$_1$) is connected to the primary side of the transformer (172) of a second (M$_2$) of the modules (M), and namely indirectly via the inverters (161, 162) of the first module (M$_1$) and the second module (M$_2$);
   - the DC voltage side of the second rectifier (182) of the second module (M$_2$) is connected to the motor-side electrical terminal (21, 22) for connecting the arrangement to the DC voltage intermediate circuit (ZK),

so that, during operation of the rail vehicle on a DC voltage network in the at least one first DC voltage operating state, energy for operating the at least one driving motor (12) is transmitted from the electrical power supply network via the second rectifier (181) of the first module (M$_1$), the secondary side of the transformer (171) of the first module (M$_1$), the primary side of the transformer (171) of the first module (M$_1$), the inverter (161) of the first module (M$_1$), the inverter (162) of the second module (M$_2$), the primary side of the transformer (172) of the second module (M$_2$), the secondary side of the transformer (172) of the second module (M$_2$), and the second rectifier (182) of the second module (M$_2$) to the DC voltage intermediate circuit.

8. The method according to the preceding claim, wherein, for operating the rail vehicle in the at least one first DC voltage operating state, the DC voltage side of the second rectifier (181) of the first module (M$_1$), in addition to the electrical network terminal (A) or the second of the electrical network terminals, is also connected to one of two potentials of the motor-side electrical terminal (21, 22) for connecting the arrangement to the DC voltage intermediate circuit (ZK).

9. The method according to claim 7 or 8, wherein

   - for operating the rail vehicle in the at least one first DC voltage operating state, a first switch position of an electrical switch arrangement is set in which the DC voltage intermediate circuit (ZK) is connected indirectly, that is, only via at least one of the two rectifiers (181, 182), to the motor-side electrical terminal (21, 22) so that, during operation of the rail vehicle in the at least one first DC voltage operating state, energy for operating the at least one driving motor (12) is transmitted from the electrical power supply network via the second rectifier (181) of the first module ($M_1$), the inverter (161) of the first module ($M_1$), the inverter (162) of the second module ($M_2$), and the second rectifier (182) of the second module ($M_2$) to the DC voltage intermediate circuit (ZK);

- for operating the rail vehicle in a second DC voltage operating state, a second switch position of the electrical switch arrangement is set in which the DC voltage intermediate circuit (ZK) is connected via an electrical line connection directly, that is, not only via at least one of the two rectifiers (181, 182), to the electrical network terminal (A) or one of the electrical network terminals, so that, during operation of the rail vehicle in the second DC voltage operating state, energy for operating the at least one driving motor (12) is transmitted from the electrical power supply network directly via the electrical line connection to the DC voltage intermediate circuit (ZK).

10. The method according to any one of claims 7 to 9, wherein - for operating the rail vehicle in a predefined first DC voltage operating state - one of the electrical coupling connections is established by indirectly connecting the DC voltage side of the inverter (161) of the first module ($M_1$) via a semiconductor switch of the first rectifier (151) of the first module ($M_1$) and via a semiconductor switch of the first rectifier (152) of the second module ($M_2$) to the DC voltage side of the inverter (162) of the second module ($M_2$), the semiconductor switch of the first rectifier (151) of the first module ($M_1$) and the semiconductor switch of the first rectifier (152) of the second module ($M_2$) remaining permanently switched on during the predefined first DC voltage operating state.

11. A method for producing an electrical power supply arrangement for drive devices, for operating a rail vehicle on electrical supply networks, comprising:

• providing at least one electrical network terminal (10) for connecting the arrangement to an electrical power supply network;
• providing a motor-side electrical terminal (21, 22) for connecting the arrangement to a DC voltage intermediate circuit (ZK), to which, in turn, at least one traction inverter (13) for operating at least one driving motor (12) can be connected;
• providing a rectifier arrangement ($M_1$, $M_2$, $M_3$, $M_4$) for operating the rail vehicle on an AC voltage network and connecting the rectifier arrangement ($M_1$, $M_2$, $M_3$, $M_4$) via a first filter (2) to the electrical network terminal (A) or to one of the electrical network terminals, the rectifier arrangement ($M_1$, $M_2$, $M_3$, $M_4$) comprising a plurality of modules (M), in each of which a first rectifier (15) is connected via an inverter (16), which is connected to the primary side of a transformer (17), and the transformer (17) to a second rectifier (18), the secondary side of the transformer (17) being connected to the second rectifier (18), and the first rectifier (15) on the AC voltage side thereof being connected via the first filter (2) to the electrical network terminal (A) or to one of the electrical network terminals, the second rectifier (18) on the DC voltage side thereof being connected to the motor-side electrical terminal (21, 22), and the AC voltage terminals (19, 20) of the first rectifiers (15) being connected in series, a control and a switch arrangement controlled by the control being provided, which - during operation of the rail vehicle on an AC voltage network - connect the DC voltage terminals (211, 212; 221, 222) of the second rectifiers (181, 182) in parallel;
• providing an electrical terminal connection (5) for operating the rail vehicle on a DC voltage network, wherein the electrical terminal connection (5) comprises a second filter (3),

wherein the control and the switch arrangement are configured - at least in a first DC voltage operating state - during operation of the rail vehicle on a DC voltage network,

- to connect the electrical network terminal (A) or a second of the electrical network terminals via the electrical terminal connection (5) to the DC voltage side of the second rectifier (181) of a first ($M_1$) of the modules (M);
- to connect the primary side of the transformer (171) of the first module ($M_1$) to the primary side of the transformer (172) of a second ($M_2$) of the modules (M), and namely indirectly via the inverters (161, 162) of the first module ($M_1$) and of the second module ($M_2$);
- connect the DC voltage side of the second rectifier (182) of the second module ($M_2$) to the motor-side electrical terminal (21, 22) for connecting the arrangement to the DC voltage intermediate circuit (ZK),
- so that energy for operating the at least one driving motor (12) is transmitted from the electrical power supply network via the second rectifier (181) of the first module ($M_1$), the second-

ary side of the transformer (171) of the first module (M$_1$), the primary side of the transformer (171) of the first module (M$_1$), the inverter (161) of the first module (M$_1$), the inverter (162) of the second module (M$_2$), the primary side of the transformer (172) of the second module (M$_2$), the secondary side of the transformer (172) of the second module (M$_2$), and the second rectifier (182) of the second module (M$_2$) to the DC voltage intermediate circuit.

## Revendications

1.  Ensemble d'alimentation en énergie électrique pour des dispositifs d'entraînement, servant à faire fonctionner un véhicule sur rails sur des réseaux d'alimentation électriques, dans lequel l'ensemble d'alimentation en énergie présente :

    • au moins une borne de raccordement au réseau électrique (A) servant à raccorder l'ensemble à un réseau d'alimentation en énergie électrique,
    • une borne de raccordement électrique côté moteur (21, 22) servant à raccorder l'ensemble à un circuit intermédiaire à tension continue (ZK), auquel au moins un onduleur de traction (13) servant à faire fonctionner au moins un moteur de traction (12) peut être raccordé à nouveau,
    • un ensemble de redresseurs (M$_1$, M$_2$, M$_3$, M$_4$) servant à faire fonctionner le véhicule sur rails sur un réseau à tension alternative, dans lequel l'ensemble de redresseurs (M$_1$, M$_2$, M$_3$, M4) est relié par l'intermédiaire d'un premier filtre (2) à la borne de raccordement au réseau électrique (A) ou à une des bornes de raccordement au réseau électriques et présente une multitude de modules (M), dans lesquels respectivement un premier redresseur (15) est relié par l'intermédiaire d'un onduleur (16), qui est raccordé au côté primaire d'un transformateur (17), et du transformateur (17) à un deuxième redresseur (18), dans lequel le côté secondaire du transformateur (17) est relié au deuxième redresseur (18) et le premier redresseur (15) est relié sur son côté de tension alternative par l'intermédiaire du premier filtre (2) à la borne de raccordement au réseau électrique (A) ou à une des bornes de raccordement au réseau électriques, dans lequel le deuxième redresseur (18) est relié sur son côté de tension continue à la borne de raccordement électrique côté moteur (21, 22) et dans lequel les bornes raccordement de tension alternative (19, 20) des premiers redresseurs (15) sont branchées en série, dans lequel
    - lors du fonctionnement du véhicule sur rails sur un réseau à tension alternative - les bornes de raccordement de tension continue (211, 211 ; 221, 222) des deuxièmes redresseurs (181, 182) sont branchées en parallèle,
    • une liaison de raccordement électrique (5) servant à faire fonctionner le véhicule sur rails sur un réseau à tension continue, dans lequel la liaison de raccordement électrique (5) présente un deuxième filtre (3),

    dans lequel - au moins dans un premier état de fonctionnement en tension continue - lors du fonctionnement du véhicule sur rails sur un réseau à tension continue,

    - la liaison de raccordement électrique (5) relie la borne de raccordement au réseau électrique (A) ou une deuxième borne de raccordement au réseau électrique au côté de tension continue du deuxième redresseur (181) d'un premier (M$_1$) des modules (M),
    - le côté primaire du transformateur (171) du premier module (M$_1$) est relié au côté primaire du transformateur (172) d'un deuxième (M$_2$) des modules (M), et ce indirectement par l'intermédiaire des onduleurs (161, 162) du premier module (M$_1$) et du deuxième module (M$_2$),
    - le côté de tension continue du deuxième redresseur (182) du deuxième module (M$_2$) est relié à la borne de raccordement électrique côté moteur (21, 22) servant à raccorder l'ensemble au circuit intermédiaire à tension continue (ZK),
    - de sorte que de l'énergie est transmise aux fins du fonctionnement de l'au moins un moteur de traction (12) depuis le réseau d'alimentation en énergie électrique par l'intermédiaire du deuxième redresseur (181) du premier module (M$_1$), du côté secondaire du transformateur (171) du premier module (M$_1$), du côté primaire du transformateur (171) du premier module (M$_1$), de l'onduleur (161) du premier module (M$_1$), de l'onduleur (162) du deuxième module (M$_2$), du côté primaire du transformateur (172) du deuxième module (M$_2$), du côté secondaire du transformateur (172) du deuxième module (M$_2$) et du deuxième redresseur (182) du deuxième module (M$_2$) dans le circuit intermédiaire à tension continue (ZK).

2.  Ensemble d'alimentation en énergie selon la revendication précédente, dans lequel pour relier les côtés primaires des transformateurs (171, 172) du premier (M$_1$) et du deuxième (M$_2$) modules, le côté de tension continue de l'onduleur (161) du premier module (M$_1$) est relié au côté de tension continue de l'onduleur (162) d'un deuxième (M$_2$) des modules (M), et ce directement par l'intermédiaire d'au moins une liaison de couplage électrique servant au couplage des côtés de tension continue des onduleurs (161, 162) et/ou indirectement par l'intermédiaire du premier redresseur (151) du premier module ($M_1$) et par l'intermédiaire du premier redresseur (152) du deuxième module ($M_2$).

3. Ensemble d'alimentation en énergie selon l'une quelconque des revendications précédentes, dans lequel lors du fonctionnement du véhicule sur rails, dans l'au moins un premier état de fonctionnement en tension continue, le côté de tension continue du deuxième redresseur (181) du premier module ($M_1$) est relié en dehors de la liaison de raccordement électrique (5) également à un parmi deux potentiels de la borne de raccordement électrique côté moteur (21, 22) servant à raccorder l'ensemble au circuit intermédiaire à tension continue (ZK).

4. Ensemble d'alimentation en énergie selon l'une quelconque des revendications précédentes, dans lequel l'ensemble présente une liaison d'acheminement électrique (4) et un ensemble commutateur électrique, dans lequel

    - lors du fonctionnement du véhicule sur rails dans l'au moins un premier état de fonctionnement en tension continue, dans une première position de commutateur de l'ensemble de commutateurs électrique, le circuit intermédiaire à tension continue (ZK) est relié indirectement, en d'autres termes seulement par l'intermédiaire d'au moins un des deuxièmes redresseurs (181, 182), à la borne de raccordement électrique côté moteur (21, 22) de sorte que de l'énergie est transmise aux fins du fonctionnement de l'au moins un moteur de traction (12) depuis le réseau d'alimentation en énergie électrique par l'intermédiaire du deuxième redresseur (181) du premier module ($M_1$), de l'onduleur (161) du premier module ($M_1$), de l'onduleur (162) du deuxième module ($M_2$) et du deuxième redresseur (182) du deuxième module ($M_2$) dans le circuit intermédiaire à tension continue (ZK),
    - lors du fonctionnement du véhicule sur rails dans un deuxième état de fonctionnement en tension continue, dans une deuxième position de commutateur de l'ensemble de commutateurs électrique, le circuit intermédiaire à tension continue (ZK) est relié par l'intermédiaire de la liaison d'acheminement électrique (4) directement, en d'autres termes pas seulement par l'intermédiaire d'au moins un des deuxièmes redresseurs (181, 182), à la borne de raccordement au réseau électrique (A) ou à une des bornes de raccordement au réseau électriques de sorte que de l'énergie est transmise aux fins du fonctionnement de l'au moins un moteur de traction (12) depuis le réseau d'alimentation en énergie électrique directement par l'intermédiaire de la liaison d'acheminement électrique dans le circuit intermédiaire à tension continue (ZK).

5. Ensemble d'alimentation en énergie selon l'une quelconque des revendications précédentes, dans lequel - dans un premier état de fonctionnement en tension continue prédéfini - une des liaisons de couplage électriques relie le côté de tension continue de l'onduleur (161) du premier module ($M_1$) indirectement par l'intermédiaire d'un commutateur semi-conducteur du premier redresseur (151) du premier module ($M_1$) et par l'intermédiaire d'un commutateur semi-conducteur du premier redresseur (152) du deuxième module ($M_2$) au côté de tension continue de l'onduleur (162) du deuxième module ($M_2$) et dans lequel le commutateur semi-conducteur du premier redresseur (151) du premier module ($M_1$) et le commutateur semi-conducteur du premier redresseur (152) du deuxième module ($M_2$) sont activés en permanence au cours du premier état de fonctionnement en tension continue prédéfini.

6. Ensemble d'alimentation en énergie selon l'une quelconque des revendications précédentes, qui présente un dispositif de commande servant à commander le fonctionnement du premier redresseur (151, 152) du premier et du deuxième module ($M_1$, $M_2$), tandis que le véhicule sur rails fonctionne dans l'au moins un premier état de fonctionnement en tension continue, dans lequel le dispositif de commande est configuré pour générer par la commande de moments de commutation de commutateurs semiconducteurs (G) d'au moins un des premiers redresseurs (151, 152), sur le côté de tension continue de l'onduleur (162) du deuxième module ($M_2$), une tension continue prédéfinie en tenant compte de la tension continue du réseau d'alimentation en énergie électrique et d'une tension continue souhaitée dans le circuit intermédiaire à tension continue (ZK) de sorte que la tension continue souhaitée est obtenue dans le circuit intermédiaire à tension continue (ZK).

7. Procédé servant à faire fonctionner un véhicule sur rails au moyen d'un ensemble d'alimentation en énergie électrique sur des réseaux d'alimentation électriques, dans lequel :

    • l'ensemble d'alimentation en énergie est raccordé par l'intermédiaire d'au moins une borne de raccordement au réseau électrique (A) à un réseau d'alimentation en énergie électrique,
    • l'ensemble d'alimentation en énergie est raccordé par l'intermédiaire d'une borne de raccordement électrique côté moteur (21, 22) à un circuit intermédiaire à tension continue (ZK), auquel au moins un onduleur de traction (13) servant à faire fonctionner au moins un moteur de traction (12) se trouve dans l'état raccordé ou est raccordé à nouveau,

• un ensemble de redresseurs (M$_1$, M$_2$, M$_3$, M$_4$) de l'ensemble d'alimentation en énergie servant à faire fonctionner le véhicule sur rails sur un réseau à tension alternative est relié par l'intermédiaire d'un premier filtre (2) à la borne de raccordement au réseau électrique (A) ou à une des bornes de raccordement au réseau électriques, dans lequel l'ensemble de redresseurs (M$_1$, M$_2$, M$_3$, M$_4$) présente une multitude de modules (M), dans lesquels respectivement un premier redresseur (15) est relié par l'intermédiaire d'un onduleur (16), qui est raccordé au côté primaire d'un transformateur (17), et du transformateur (17) à un deuxième redresseur (18), dans lequel le côté secondaire du transformateur (17) est relié au deuxième redresseur (18) et le premier redresseur (15) est relié sur son côté de tension alternative par l'intermédiaire du premier filtre (2) à la borne de raccordement au réseau électrique (A) ou à l'une des bornes de raccordement au réseau électriques, dans lequel le deuxième redresseur (18) est relié sur son côté de tension continue à la borne de raccordement électrique côté moteur (21, 22) et dans lequel les bornes de raccordement de tension alternative (19, 20) des premiers redresseurs (15) sont branchées en série ou sont dans un état branché en série, dans lequel - pour faire fonctionner le véhicule sur rails sur un réseau à tension alternative - les bornes de raccordement de tension continue (211, 212 ; 221, 222) des deuxièmes redresseurs (181, 182) sont branchées en parallèle,

•

- au moins dans un premier état de fonctionnement en tension continue - pour faire fonctionner le véhicule sur rails sur un réseau à tension continue,
- la borne de raccordement au réseau électrique (A) ou une deuxième des bornes de raccordement au réseau électriques est reliée par l'intermédiaire d'un deuxième filtre (3) au réseau d'alimentation électrique,
- la borne de raccordement au réseau électrique (A) ou la deuxième des bornes de raccordement au réseau électriques est reliée au côté de tension continue du deuxième redresseur (181) d'un premier (M$_1$) des modules (M),
- le côté primaire du transformateur (171) du premier module (M1) est relié au côté primaire du transformateur (172) d'un deuxième (M2) des modules (M), et ce indirectement par l'intermédiaire des onduleurs (161, 162) du premier module (M1) et du deuxième module (M2),
- le côté de tension continue du deuxième redresseur (182) du deuxième module (M2) est relié à la borne de raccordement électrique côté moteur (21, 22) servant à raccorder l'ensemble au circuit intermédiaire à tension continue (ZK),

de sorte que lors du fonctionnement du véhicule sur rails sur un réseau à tension continue dans l'au moins un premier état de fonctionnement en tension alternative, de l'énergie est transmise aux fins du fonctionnement de l'au moins un moteur de traction (12) depuis le réseau d'alimentation en énergie électrique par l'intermédiaire du deuxième redresseur (181) du premier module (M$_1$), du côté secondaire du transformateur (171) du premier module (M$_1$), du côté primaire du transformateur (171) du premier module (M$_1$), de l'onduleur (161) du premier module (M$_1$), de l'onduleur (162) du deuxième module (M$_2$), du côté primaire du transformateur (172) du deuxième module (M$_2$), du côté secondaire du transformateur (172) du deuxième module (M$_2$) et du deuxième redresseur (182) du deuxième module (M$_2$) dans le circuit intermédiaire à tension continue (ZK).

**8.** Procédé selon la revendication précédente, dans lequel pour faire fonctionner le véhicule sur rails dans l'au moins un premier état de fonctionnement en tension continue, le côté de tension continue du deuxième redresseur (181) du premier module (M$_1$) est relié en dehors de la borne de raccordement au réseau électrique (A) ou de la deuxième des bornes de raccordement au réseau électriques, également à un parmi deux potentiels de la borne de raccordement électrique côté moteur (21, 22) servant à raccorder l'ensemble au circuit intermédiaire à tension continue (ZK).

**9.** Procédé selon la revendication 7 ou 8, dans lequel

- pour faire fonctionner le véhicule sur rails dans l'au moins un premier état de fonctionnement en tension continue, une première position de commutateur d'un ensemble de commutateurs électrique est réglée, dans laquelle le circuit intermédiaire à tension continue (ZK) est relié indirectement, en d'autres termes seulement par l'intermédiaire d'au moins un des deuxièmes redresseurs (181, 182), à la borne de raccordement électrique côté moteur (21, 22), de sorte que lors du fonctionnement du véhicule sur rails dans l'au moins un premier état de fonctionnement en tension continue, de l'énergie est transmise aux fins du fonctionnement de l'au moins un moteur de traction (12) depuis le réseau d'alimentation en énergie électrique par l'intermédiaire du deuxième redresseur (181) du premier

module (M$_1$), de l'onduleur (161) du premier module (M$_1$), de l'onduleur (162) du deuxième module (M$_2$), et du deuxième redresseur (182) du deuxième module (M$_2$), dans le circuit intermédiaire en tension continue (ZK),

- aux fins du fonctionnement du véhicule sur rails dans un deuxième état de fonctionnement en tension continue, une deuxième position de commutateur de l'ensemble de commutateurs électrique est réglée, dans laquelle le circuit intermédiaire à tension continue (ZK) est relié par l'intermédiaire d'une liaison d'acheminement électrique directement, en d'autres termes pas seulement par l'intermédiaire d'au moins un des deuxièmes redresseurs (181, 182), à la borne de raccordement au réseau électrique (A) ou à une des bornes de raccordement au réseau électriques, de sorte que lors du fonctionnement du véhicule sur rails dans le deuxième état de fonctionnement en tension continue, de l'énergie est transmise aux fins du fonctionnement de l'au moins un moteur de traction (12) depuis le réseau d'alimentation en énergie électrique directement par l'intermédiaire de la liaison d'acheminement électrique dans le circuit intermédiaire à tension continue (ZK).

10. Procédé selon l'une quelconque des revendications 7 à 9, dans lequel - pour faire fonctionner le véhicule sur rails dans un premier état de fonctionnement en tension continue prédéfini - une des liaisons de couplage électriques est produite en ce que le côté de tension continue de l'onduleur (161) du premier module (M$_1$) est relié, indirectement par l'intermédiaire d'un commutateur semi-conducteur du premier redresseur (151) du premier module (M$_1$) et par l'intermédiaire d'un commutateur semi-conducteur du premier redresseur (152) du deuxième module (M$_2$), au côté de tension continue de l'onduleur (162) du deuxième module (M$_2$), et dans lequel le commutateur semi-conducteur du premier redresseur (151) du premier module (M$_1$) et le commutateur semi-conducteur du premier redresseur (152) du deuxième module (M$_2$) restent activés en permanence au cours du premier état de fonctionnement en tension continue prédéfini.

11. Procédé servant à produire un ensemble d'alimentation en énergie électrique pour des dispositifs d'entraînement, servant à faire fonctionner un véhicule sur rails sur des réseaux d'alimentation électriques, présentant :

    • la fourniture d'au moins une borne de raccordement au réseau électrique (10) servant à raccorder l'ensemble à un réseau d'alimentation en énergie électrique,
    • la fourniture d'une borne de raccordement électrique côté moteur (21, 22) servant à raccorder l'ensemble à un circuit intermédiaire à tension continue (ZK), auquel au moins un onduleur de traction (13) servant à faire fonctionner au moins un moteur de traction (12) peut être raccordé à nouveau,
    • la fourniture d'un ensemble de redresseurs (M$_1$, M$_2$, M$_3$, M$_4$) servant à faire fonctionner le véhicule sur rail sur un réseau à tension alternative et la liaison de l'ensemble de redresseurs (M$_1$, M$_2$, M$_3$, M$_4$) par l'intermédiaire d'un premier filtre (2) à la borne de raccordement au réseau électrique (A) ou à une des bornes de raccordement au réseau électriques, dans lequel l'ensemble de redresseurs (M$_1$, M$_2$, M$_3$, M$_4$) présente une multitude de modules (M), dans lesquels respectivement un premier redresseur (15) est relié par l'intermédiaire d'un onduleur (16), qui est raccordé au côté primaire d'un transformateur (17), et du transformateur (17) à un deuxième redresseur (18), dans lequel le côté secondaire du transformateur (17) est relié au deuxième redresseur (18) et le premier redresseur (15) est relié sur son côté de tension alternative par l'intermédiaire du premier filtre (2) à la borne de raccordement au réseau électrique (A) ou à l'une des bornes de raccordement au réseau électriques, dans lequel le deuxième redresseur (18) est relié sur son côté de tension continue à la borne de raccordement électrique côté moteur (21, 22), et dans lequel

les bornes de tension alternative (19, 20) des premiers redresseurs (15) sont branchées en série, dans lequel une commande et un ensemble de commutateurs commandé par la commande sont prévus, qui - lors du fonctionnement du véhicule sur rails sur un réseau à tension alternative - les bornes de raccordement de tension continue (211, 212 ; 221, 222) des deuxièmes redresseurs (181, 182) sont branchées en parallèle,
    • la fourniture d'une liaison de raccordement électrique (5) servant à faire fonctionner le véhicule sur rails sur un réseau à tension continue, dans lequel la liaison de raccordement électrique (5) présente un deuxième filtre (3),

dans lequel la commande et l'ensemble de commutateurs sont configurés pour - au moins dans un premier état de fonctionnement en tension continue - lors du fonctionnement du véhicule sur rails sur un réseau à tension continue,

    - relier la borne de raccordement au réseau électrique (A) ou une deuxième des bornes de raccordement au réseau électriques par l'intermédiaire de la liaison de raccordement électrique (5), au côté de tension continue du deuxième redresseur (181) d'un premier (M$_1$) des modules (M),

- relier le côté primaire du transformateur (171) du premier module (M$_1$) au côté primaire du transformateur (172) d'un deuxième (M$_2$) des modules (M), et ce indirectement par l'intermédiaire des onduleurs (161, 162) du premier module (M$_1$) et du deuxième module (M$_2$),

- relier le côté de tension continue du deuxième redresseur (182) du deuxième module (M$_2$) à la borne de raccordement électrique côté moteur (21, 22) servant à raccorder l'ensemble au circuit intermédiaire à tension continue (ZK),

- de sorte que de l'énergie est transmise aux fins du fonctionnement de l'au moins un moteur de traction (12) depuis le réseau d'alimentation en énergie électrique par l'intermédiaire du deuxième redresseur (181) du premier module (M$_1$), du côté secondaire du transformateur (171) du premier module (M$_1$), du côté primaire du transformateur (171) du premier module (M$_1$), de l'onduleur (161) du premier module (M$_1$), de l'onduleur (162) du deuxième module (M$_2$), du côté primaire du transformateur (172) du deuxième module (M$_2$), du côté secondaire du transformateur (172) du deuxième module (M$_2$) et du deuxième redresseur (182) du deuxième module (M$_2$) dans le circuit intermédiaire à tension continue (ZK).

Fig. 1

Fig. 2

EP 2 586 646 B1

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10204219 A1
- EP 0826550 A1
- EP 0992390 A2
- DE 19630284 A1